(19) Europäisches Patentamt
European Patent Office
Office européen des brevets

(11) **EP 1 105 696 B1**

(12) **EUROPÄISCHE PATENTSCHRIFT**

(45) Veröffentlichungstag und Bekanntmachung des Hinweises auf die Patenterteilung:
**28.03.2007 Patentblatt 2007/13**

(21) Anmeldenummer: **00945618.7**

(22) Anmeldetag: **08.06.2000**

(51) Int Cl.:
***G01C 21/34*** *(2006.01)*

(86) Internationale Anmeldenummer:
**PCT/DE2000/001874**

(87) Internationale Veröffentlichungsnummer:
**WO 2000/079219 (28.12.2000 Gazette 2000/52)**

(54) **VERFAHREN UND VORRICHTUNG ZUM BESTIMMEN EINER ROUTE VON EINEM AUSGANGSORT ZU EINEM ZIELORT**

METHOD AND DEVICE FOR DETERMINING A ROUTE FROM A STARTING LOCATION TO A FINAL DESTINATION

PROCEDE ET DISPOSITIF POUR DETERMINER UNE ROUTE ENTRE UN POINT DE DEPART ET UN POINT D'ARRIVEE

(84) Benannte Vertragsstaaten:
**DE FR GB IT**

(30) Priorität: **22.06.1999 DE 19928295**

(43) Veröffentlichungstag der Anmeldung:
**13.06.2001 Patentblatt 2001/24**

(73) Patentinhaber: **ROBERT BOSCH GMBH**
**70442 Stuttgart (DE)**

(72) Erfinder:
• **MUELLER, Guido**
**D-06484 Quedlinburg (DE)**
• **FABIAN, Thomas**
**D-31139 Hildesheim (DE)**

(56) Entgegenhaltungen:
**EP-A- 0 854 353          DE-A- 4 301 875**

• **KIRSON A M: "ROUTE PLANNING SYSTEM WITH USER SELECTABLE PREFERENCES" MOTOROLA TECHNICAL DEVELOPMENTS,US, MOTOROLA INC. SCHAUMBURG, ILLINOIS, Bd. 13, 1. Juli 1991 (1991-07-01), Seiten 58-59, XP000259107**

EP 1 105 696 B1

**Beschreibung**

Technisches Gebiet

Die Erfindung betrifft ein Verfahren zum Bestimmen einer Route von einem Ausgangsort zu einem Zielort auf der Basis einer digitalen Karte, welche ein reales Straßennetz in Kanten mit jeweiligen Widerständen und Knoten abbildet, wobei mittels eines Routensuchalgorithmus für die Route optimierte Kanten in einer Routentabelle abgespeichert werden, wobei für die Route wenigstens ein Zwischenziel vorbestimmt wird, gemäß dem Oberbegriff des Anspruchs 1. Die Erfindung betrifft ferner eine Vorrichtung zum Bestimmen einer Route von einem Ausgangsort zu einem Zielort auf der Basis einer in einem Speicher abgespeicherten digitalen Karte, welche ein reales Straßennetz in Kanten mit jeweiligen Widerständen und Knoten abbildet, gemäß dem Oberbegriff des Anspruchs 11.

Stand der Technik

In Fortbewegungsmitteln, wie beispielsweise Kraftfahrzeugen, Flugzeugen oder Schiffen, fest installierte Navigationssysteme leiten einen Führer des Fortbewegungsmittels schnell, einfach und sicher an einen gewünschten Zielort, ohne daß dieser vorher aufwendig eine Route planen und entsprechendes Kartenmaterial erwerben bzw. studieren muß. Hierzu liegen entsprechende, beispielsweise auf Karten, Landkarten oder Straßenkarten basierende, Navigationsdaten in dem Navigationssystem beispielsweise auf CD-ROM gespeichert vor. Das Navigationsgerät nutzt beispielsweise GPS (Global Positioning System) um einen momentanen Standort festzustellen und entsprechende Navigationsanweisungen zu berechnen, welche zu einem vorbestimmten Ziel führen. Die Navigationsdaten beinhalten dabei vorzugsweise Daten über Straßen und Wege für Kraftfahrzeuge.

In herkömmlichen Navigationssystemen kann ein Fahrer eines Kraftfahrzeuges einen Verlauf einer zu berechnenden Route auf verschiedene Art und Weisen beeinflussen, nämlich durch Wahl von unterschiedlichen Optimierungskriterien, wie "kurze Route", "schnelle Route", "meide Autobahn", durch manuelle oder per Verkehrstelematik bestimmte Beeinflussung von Straßenabschnitten, die dann bei der Routenberechnung umfahren bzw. begünstigt werden, oder durch Definition von einem oder mehreren Zwischenzielen, die dann der Reihe nach angefahren werden, um dann abschließend zum Endziel zu führen. Für den Wunsch eines Fahrers "Ich möchte von Kassel über Hannover nach Minden fahren" bietet sich dem Fahrer jedoch nur die letztgenannte Möglichkeit. Er muß in Hannover ein Zwischenziel definieren, das beispielsweise das Stadtzentrum ist, wonach zwei Routenberechnungen angestoßen werden. Es wird eine erste Route von Kassel nach Hannover und eine zweite Route von Hannover nach Minden berechnet. Durch die Aneinanderreihung von beiden Routen ergibt sich dann die Gesamtroute. Es ist beispielsweise bei dem Alpine Navigationssystem "GPShuttle NVE-N055VP" möglich, bis zu fünf Zwischenziele auszuwählen.

Es ist jedoch nachteilig, daß bei der Verwendung von Zwischenzielen entsprechend der Anzahl der Zwischenziele mehrere, voneinander unabhängige Routenberechnungen erfolgen. Zunächst werden nämlich die Teilrouten von der Ist-Position zum Zwischenziel, danach vom letzten Zwischenziel zum nächsten und letztendlich zum eigentlichen Ziel bestimmt. Hierbei werden jedoch die jeweiligen Teilrouten, nicht jedoch die Gesamtroute, optimiert. Selbst wenn als Zwischenziel nicht ein Ort, sondern ein Gebiet, beispielsweise Stadtgebiet Hannover, angegeben wird, erfolgt die Optimierung der Route lediglich bis zum Rand des Gebietes, so dass die erste Teilroute im eingangs geschilderten Fall irgendwo am Stadtrand von Hannover endet. Wo sich dieser Punkt an der Peripherie von Hannover genau befindet hängt lediglich von der Route vom Startpunkt zu diesem Zwischenziel ab. Es kann jedoch keine Optimierung des Punktes an der Peripherie von Hannover bzgl. der nachfolgenden Route, beispielsweise zum Zielort oder zum nächsten Zwischenziel erfolgen. Dadurch ergeben sich ggf. im Bereich es Zwischenziels ungünstige Routenführungen, unsinniges Wenden oder vermeidbare Stadtdurchfahrten.

Kirson AM: "Route planning system with user selectable preferences", Motorola Technical Developments, US, Motorola Inc., Shaumburg, Illinois, Band 13, 01.07.1991 (1991-07-01), Seiten 58 bis 59, XP 000 259 107 offenbart eine Vorrichtung zum Bestimmen einer Route von einem Ausgangsort zu einem Zielort auf der Basis einer in einem Speicher abgespeicherten digitalen Karte, welcher ein reales Straßennetz in Kanten mit jeweiligen Widerständen und Knoten abbildet. Diese Vorrichtung verfügt über eine Einrichtung zur Eingabe und Definition von einem in der Form eines flächenhaften Übergangsbereichs der digitalen Karte definierten Zwischenziel. Die Vorrichtung ist so ausgeführt, dass die Routenberechnung abschnittsweise vom Startpunkt zu einem dem Startpunkt nächstgelegenen Punkt des Zwischenziels und in einem zweiten Schritt von einem dem Zielort nächstgelegenen Punkt des Zwischenziels zum Zielort berechnet wird.

Darstellung der Erfindung, Aufgabe, Lösung, Vorteile

Es ist Aufgabe der vorliegenden Erfindung, ein verbessertes Verfahren der oben genannten Art zur Verfügung zu stellen, welche die oben genannten Nachteile beseitigt und eine Berechnung einer optimalen Route auch dann gewährleistet, wenn ein Benutzer eines Navigationsverfahrens Zwischenziele angibt.

Diese Aufgabe wird durch ein Verfahren der o.g. Art mit den in Anspruch 1 gekennzeichneten Merkmalen und durch eine Vorrichtung der o.g. Art mit den in Anspruch 11 gekennzeichneten Merkmalen gelöst.

Dazu ist es bei eine Verfahren der o.g. Art erfindungsgemäß vorgesehen, dass wenigstens ein Zwischenziel als Übergangsbereich in Form einer Gruppe von Kanten definiert wird, wobei bei der Bestimmung der Route der Widerstand der Gesamtroute vom Ausgangsort über alle Zwischenziele bis zum Zielort minimiert wird.

Dies hat den Vorteil, daß eine Streckenführung einer zu berechnenden Route durch Vergabe von Übergangsgebieten (ViaArea) gezielt beeinflussbar ist. Im Gegensatz zu herkömmlichen Verfahren mit Zwischenzielen wird die Route von der Ausgangsposition über das Übergangsgebiet zum Ziel als Ganzes und nicht abschnittsweise optimiert. Ferner muß sich der Fahrer keine Gedanken über eine konkrete Zwischenzieldefinition machen. Durch die Erfindung ist sichergestellt, dass nach der Berechnung der Route zu jedem Zeitpunkt die optimale Route von jedem möglichen Ausgangspunkt bzw. jeder möglichen Position eines Fahrzeugs zum Zielort über den bzw. die Übergangsbereiche verfügbar ist. Dadurch kann immer eine entsprechende Entfernung zum Ziel, sowie eine verbleibende Fahrzeit oder auch eine geschätzte Ankunftszeit angegeben werden. Bei der Routenberechnung vom Ausgangsort zum Zielort finden somit neben herkömmlichen, vorbestimmbaren Kriterien, wie beispielsweise "kurze Route", "schnelle Route" oder ähnliches, auch ein oder mehr ViaAreas Berücksichtigung, wobei die ViaAreas in einer vom Benutzer vorbestimmten Reihenfolge in die berechnete Route eingebunden werden.

Vorzugsweise Weitergestaltungen des Verfahrens sind in den Ansprüchen 2 bis 10 beschrieben.

In einer bevorzugten Ausführungsform wird jedes Zwischenziel als Übergangsbereich in der Form eines flächenhaften Bereichs der digitalen Karte definiert und es werden entsprechende, in dem flächenhaften Bereich befindliche Kanten des entsprechenden Übergangsbereiches zugeordnet und in einer Übergangsbereichliste gespeichert, wobei eine erste Kantenoptimierung von einer dem Zielort entsprechenden Zielkante ausgehend durchgeführt und das Ergebnis in einer ersten Routentabelle abgespeichert wird, wobei ferner der Anzahl der vorbestimmten Übergangsbereiche entsprechende weitere Abschnitts-Kantenoptimierungen durchgeführt und in jeweiligen, separaten Abschnitts-Routentabellen gespeichert werden, wobei am Ende der ersten Kantenoptimierung die in der grund- und zielinitialisierten Übergangsbereichliste gespeicherten Kanten mit entsprechenden Widerständen aus der ersten Routentabelle aktualisiert werden, wobei ferner zu Beginn einer jeden Abschnitts-Kantenoptimierung in die jeweilige grundinitialisierte Abschnitts-Routentabelle die aktuellen Widerstände der Kanten der Übergangsbereichliste eingetragen werden und wobei ferner jeweils am Ende der ersten bis zur vorletzten Abschnitts-Kantenoptimierung die Widerstände der in der jeweils aktuellen Übergangsbereichliste gespeicherten Kanten mit Widerständen der entsprechenden Kanten der jeweiligen Abschnitts-Routentabelle aktualisiert werden, wobei nach der letzten Abschnitts-Kantenoptimierung beginnend mit der letzten Abschnitts-Routentabelle bis zur ersten Routentabelle aus diesen eine Routenliste zusammen gesetzt wird, so daß der Gesamtwiderstand der Route vom Ausgangsort über ein oder mehrere Zwischenziele zum Zielort minimal ist.

Zweckmäßigerweise erfolgt das Zusammensetzen der Routenliste derart, daß beginnend mit der Abschnitts-Routentabelle der zuletzt ausgeführten Abschnitts-Kantenoptimierung nacheinander entsprechende Kanten in die Routenliste eingetragen werden, bis in der jeweiligen Abschnitts-Routentabelle für eine Kante kein Nachfolger definiert ist und mit dieser Kante mit einer nächsten und weiteren Abschnitts-Routentabelle bis zur ersten Routentabelle in gleicher Weise fortgefahren wird, wobei die Reihenfolge, in der die Abschnitts-Routentabellen abgearbeitet werden, in der Übergangsbereichliste vorbestimmt ist.

In einer bevorzugten Ausführungsform werden in der Übergangsbereichliste eine Übergangsbereich-Beschreibungsliste und eine Übergangsbereich-Indextabelle abgespeichert, wobei die Übergangsbereich-Indextabelle einen Zuordnung von Übergangsbereichen zu Übergangsbereich-Beschreibungsliste und Routentabellen enthält und die Übergangsbereich-Beschreibungsliste jeweilige eines Übergangsbereiches zugeordnete Kanten mit zugehörigen Widerständen beinhaltet. Hierbei wird als erster Eintrag in die Übergangsbereich-Beschreibungsliste das Ziel mit Widerstand null eingetragen.

Zur Grundinitialisierung werden alle Widerstände auf unendlich gesetzt und etwaig gespeicherte Nachfolger gelöscht, wogegen zur Zielinitialisierung die Widerstände einer dem Zielort entsprechenden Kante auf null gesetzt werden.

Zweckmäßigerweise wird der Übergangsbereich als Rechteck, Vieleck, Ellipse oder Kreis um einen markanten Punkt, insbesondere eine Stadt, Ballungsraum oder Autobahnausfahrt, gewählt.

Die Beschreibung der Übergangsbereiche kann bewußt räumlich unscharf bleiben, da der Fahrer lediglich eine Beeinflussung der Gesamtroute erzielen möchte.

Zweckmäßigerweise werden zusätzlich Netzbeeinflussungen durch Telematik und/oder benutzerdefinierte Manipulationen, wie beispielsweise "Stau voraus"-Sperrungen, bei der Routenberechnung berücksichtigt. Hierdurch ist eine dynamische Routenbeeinflussung durch einen Telematik-Service-Provider möglich, um beispielsweise einen Verkehrsfluss zu lenken. Dabei bleibt ein Navigationsrechner im Fahrzeug völlig autonom und kann auf ein Abweichen des Fahrers von der Route autark und schnell reagieren.

Es ist erfindungsgemäß weiterhin vorgesehen, dass das flächenhafte Zwischenziel als Übergangsbereich in Form einer Gruppe von Katen definiert ist und zur Bestimmung der Route die Minimierung des Widerstandes der Gesamtroute vom Ausgangsort über alle Zwischenziele bis zum Zielort vorgesehen ist.

in einer vorteilhaften Ausgestaltung der Vorrichtung umfasst diese einen Navigationsrechner, einen Massendatenspeicher, welcher die digitale Karte als Abbild des realen Straßennetzes enthält, eine Sensoreinrichtung, eine Ortungseinrichtung, eine Routensucheinrichtung, einen Indexspeicher, eine Schnittstelle, einen Lautsprecher, eine Anzeigeeinrichtung und eine Eingabeeinrichtung.

Kurze Beschreibung der Zeichnungen

Nachstehend wird die Erfindung anhand der beigefügten Zeichnungen näher erläutert. Diese zeigen in

| | |
|---|---|
| Fig. 1 | ein Beispielnetz einer digitalen Karte, |
| Fig. 2 | eine Veranschaulichung von Optimierungsschritten, |
| Fig. 3 | eine Gesamtroute ohne Zwischenziel, |
| Fig. 4 | eine Teilroute vom Start zum Zwischenziel, |
| Fig. 5 | eine Teilroute vom Zwischenziel zum Ziel. |
| Fig. 6 | eine Gesamtroute mit Zwischenziel mit Zwischenziel-Routensuche, |
| Fig. 7 | eine Gesamtroute mit Zwischenziel ohne Zwischenziel-Routensuche, |
| Fig. 8 | eine Einteilung eines Bereichs einer digitalen Karte in Abschnitte und ViaAreas, |
| Fig. 9 | ein Flußdiagramm einer erfindungsgemäßen Routensuche, |
| Fig. 10 | eine schematische Darstellung des Zusammenhangs von ViaAreaIndexTabelle und ViaAreaDescriptionList, |
| Fig. 11 | ein Flußdiagramm einer Optimierungsbedingung, |
| Fig. 12 | eine schematische Darstellung des Zusammenhangs von ViaAreaList und Routentabellen, |
| Fig. 13 | ein Beispielnetz einer digitalen Karte, |
| Fig. 14 bis 22 | diverse Veranschaulichungen von Optimierungsschritten, |
| Fig. 23 | eine Gesamtroute, |
| Fig. 24 | ein Flußdiagramm des erfindungsgemäßen ViaAreaRoutensuchverfahrens, |
| Fig. 25 | eine bevorzugte Ausführungsform einer Vorrichtung zum Ausführen des erfindungsgemäßen Verfahrens, |
| Fig. 26 | eine Straßenkarte mit einer berechneten Route nach Angabe lediglich eines Ausgangsortes und eines Zielortes, |
| Fig. 27 u. 27a | eine Straßenkarte mit einer berechneten Route nach Angabe eines Ausgangsortes und eines Zielortes sowie eines Zwischenzieles in Form eines Ortes und |
| Fig. 28 u. 28 a | eine Straßenkarte mit einer berechneten Route nach Angabe eines Ausgangsortes und eines Zielortes sowie eines Zwischenzieles in Form eines erfindungsgemäßen Übergangsbereiches. |

Bester Weg zur Ausführung der Erfindung

Das erfindungsgemäße Verfahren ermittelt eine Route von einem Ausgangsort zu einem Zielort über wenigstens ein benutzerdefiniertes Zwischenziel auf der Grundlage einer digitalen Kartenbasis, welche Kanten mit entsprechend zugeordnetem Widerstand enthält, die jeweiligen realen Straßen in einem realen Straßennetz entsprechen. Dieses bzw. diese Zwischenziele sind dabei nicht exakt, sondern räumlich unscharf als Flächenbereiche angegeben. Bei der Berechnung der Route wird der Gesamtwiderstand aller zur Route gehörenden Kanten minimiert, wobei auch innerhalb der Zwischenziele mehrere Kanten zur Auswahl stehen, so dass innerhalb der Zwischenziele eine Kantenauswahl durch das erfindungsgemäße Verfahren derart erfolgt, dass eine Minimierung des Gesamtwiderstandes der Route erreicht wird.

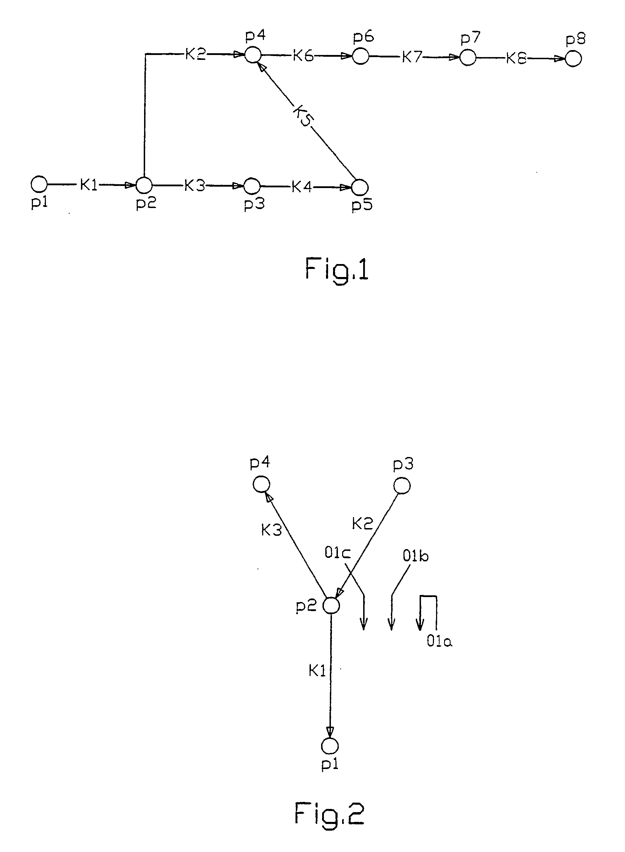

Nachfolgend wird das erfindungsgemäße Verfahren anhand eines beispielhaften, konkreten Ausführungsbeispieles detailliert beschrieben. Zunächst wird unter Bezugnahme auf die Fig. 1 bis 7 die Abbildung des realen Straßennetzes durch eine digitale Daten- bzw. Kartenbasis sowie deren Verwendung durch einen Routensuchalgorithmus näher erläutert.

Wie aus Fig. 1 ersichtlich, wird das Straßennetz zur mathematischen Bearbeitung durch einen Routensuchalgorithmus als Graph mit Kanten k und Knoten p dargestellt, wobei die Kanten entsprechende Straßen und die Knoten entsprechende Vermaschungspunkte der Straßen bzw. des Stra-βennetzes repräsentieren. In der Fig. 1 sind acht Kanten $k_1$, $k_2$, $k_3$, $k_4$, $k_5$, $k_6$, $k_7$ und $k_8$ sowie acht Knoten $p_1$, $p_2$, $p_3$, $p_4$, $p_5$, $P_6$, $P_7$ und $p_8$ vorgesehen. Da im realen Straßenverkehr der Verkehrsfluß gerichtet ist, muß auch eine Kante k als gerichteter Vektor dargestellt werden. Den Kanten k werden ferner Widerstände, sogn . Streckenwiderstände zugeordnet, welche eine Meßgröße für einen Aufwand darstellt, von einem Knoten im Netz zu einem anderen zu fahren. Beispielsweise wird die Kantenlänge als Streckenwiderstand verwendet. Alternativ kann auch, unter Einbeziehung einer mittleren Verkehrsgeschwindigkeit, eine Fahrzeit auf einer Kante als ihr jeweiliger Streckenwiderstand betrachtet werden. Den Knoten können zusätzlich Manöverwiderstände zugeordnet werden. Alle Bestwege-Algorithmen bestimmen letztlich eine Route zwischen einer Startkante und einer Zielkante im gerichteten Graphen mit der Eigenschaft, daß die Summe aller Streckenwiderstände der Kanten der ermittelten Route minimal ist.

Als Standardalgorithmus zur Routenberechnung dient ein Verfahren, welches sich auf bekannte Bestwege-Algorithmen nach Ford bzw. Moore aus der Graphentheorie abstützt, wobei diese Algorithmen auf die besonderen Anforderungen für einen Einsatz in autarken Fahrzeugnavigationssystemen angepaßt sind.

Derartige Bestwege-Algorithmen arbeiten zur Routenberechnung rückwärtsiterierend und besuchen alle Kanten im Graphen und bewertet sie in Bezug auf die günstigsten Wege zur Zielkante. Mit anderen Worten wird, ausgehend von einer Zielkante, rückwärts in jedem Iterationsschritt ein widerstandsmäßig günstiger Weg zu in einer Liste aufgeführten Kanten gesucht, weiche im vorherigen Iterationsschritt optimiert wurden. Als Ergebnis liefert das Verfahren von jeder Kante im Graphen eine optimale Route zur Zielkante. Zur Darstellung der Berechnungsergebnisse wird in einem Speicher des Navigationsgerätes eine sogn. Routentabelle angelegt. Eine derartige Tabelle würde beispielhaft für den in Fig. 1 dargestellten Graphen folgendermaßen aussehen.

Tab. 1: Routentabelle

| Kante | +Widerstand | +Nachfolgekante | -Widerstand | -Nachfolgekante |
|-------|-------------|-----------------|-------------|-----------------|
| $k_1$ | ∞ | - | ∞ | - |
| $k_2$ | ∞ | - | ∞ | - |
| $k_3$ | ∞ | - | ∞ | - |
| $k_4$ | ∞ | - | ∞ | - |
| $k_5$ | ∞ | - | ∞ | - |
| $k_6$ | ∞ | - | ∞ | - |
| $k_7$ | ∞ | - | ∞ | - |
| $k_8$ | ∞ | - | ∞ | - |

Für jede Kante im Graphen ist in der Tabelle der Widerstand bis zur Zielkante und die in Zielrichtung folgende Nachfolgekante angegeben. Als Initialisierungswert ist der Widerstand auf "unendlich" (Symbol ∞) und die Nachfolgekante auf "undefiniert" (Symbol -) gesetzt. Ein positives Vorzeichen in der Widerstand- und Nachfolgerspalte steht für die Betrachtung der jeweiligen Kante in ihrer Pfeilrichtung, wogegen ein negatives Vorzeichen für die Betrachtung der jeweiligen Kante entgegen ihrer Pfeilrichtung steht.

Vor dem Start der iterativen Optimierung ist die Zielkante in der Routentabelle mit dem Widerstand Null initialisiert. Als Beispiel einer Zielkante soll zunächst die Kante $k_1$ dienen. Es ergibt sich dann für eine Zielinitialisierung folgendes Aussehen für die gespeicherte Routentabelle.

Tab.2: Routentabelle

| Kante | +Widerstand | +Nachfolgekante | -Widerstand | -Nachfolgekante |
|-------|-------------|-----------------|-------------|-----------------|
| $k_1$ | 0 | - | 0 | - |
| $k_2$ | ∞ | - | ∞ | - |
| $k_3$ | ∞ | - | ∞ | - |
| $k_4$ | ∞ | - | ∞ | - |
| $k_5$ | ∞ | - | ∞ | - |
| $k_6$ | ∞ | - | ∞ | - |
| $k_7$ | ∞ | - | ∞ | - |
| $k_8$ | ∞ | - | ∞ | - |

Ferner ist die Zielkante $k_1$ in einer im Navigationsgerät gespeicherten Liste der bereits optimierten Kanten eingetragen, so daß sich eine Liste der bereits optimierten Kanten gemäß folgender Liste 1 ergibt.

Tab. 3: Liste 1

| (Liste der bereits optimierten Kanten) | | | | |
|---|---|---|---|---|
| $+k_1$ | $-k_1$ | | | |

Ferner ist eine zweite Liste zur Speicherung der im nächsten Optimierungsschritt zu prüfenden Kanten vorgesehen, welche zu Beginn des Verfahrens leer ist, gemäß nachfolgender Liste 2.

Tab. 4: Liste 2

| (Liste der im nächsten Schritt zu prüfenden Kanten) | | | | |
|---|---|---|---|---|
| | | | | |

Das Verfahren startet jetzt nach der obigen Initialisierung, indem es alle in der Liste 1 aufgeführten Kanten als fiktive Istposition des Fahrzeugs betrachtet und alle mit dieser "Ist-Kante" vermaschten Kanten, die sogn. "Ankommer-Kanten", einer Optimierungsprüfung (O) unterzieht. In dem genannten Beispiel (vgl. Fig. 1) lauten die mit der Ist-Kante $+k_1$ vermaschten Kanten $-k_1$, $+k_2$ und $-k_3$ (=Ankommer-Kanten). Es ergibt sich die in Fig. 2 dargestellte Situation, wobei O1a, O1b und O2c jeweilige Optimierungsprüfungen bezeichnen. Die Kante $k_1$ ist die Ist-Kante, wogegen die Kanten $k_2$ und $k_3$ Ankommer-Kanten sind. Für die Optimierung wird angenommen, daß sich das Fahrzeug auf einer der Ankommer-Kanten mit der Fahrtrichtung zur Ist-Kante befindet. In der Optimierungsprüfung wird nun der Widerstand einer jeweiligen Ankommer-Kante zum Ziel mit dem Widerstand verglichen, den die Ankommer-Kante haben würde, wenn sie über die Ist-Kante zum Ziel führen würde. Hierbei lautet eine sogn. Widerstandsoptimierungsbedingung

$$\text{Widerstand(Ankommer-Kante)} > \text{Streckenwiderstand(Ankommer-Kante)} + \text{Widerstand(Ist-Kante)}$$

Hierbei bezeichnet "Widerstand" den in der Routentabelle eingetragenen Widerstand und "Streckenwiderstand" einen im Graphen (vgl. Fig. 1) der jeweiligen Kante zugeordneten Streckenwiderstand. Mit anderen Worten wird als Optimierungsbedingung geprüft, ob die alte vorhandene Route von der Ankommer-Kante schlechter als die neue unter Benutzung der Ist-Kante ist. Wenn sich die Route über die Ist-Kante als optimaler herausstellt, wird optimiert. Entsprechend Fig. 2 ergeben sich folgende Optimierungsbeziehungen:

Tab. 5: Ist-Ankommer-Kantenbeziehungen bei der Optimierung

| Optimierung | Ist-Kante | Ankommer-Kante |
|---|---|---|
| O1a | $+k_1$ | $-k_1$ |
| O1b | $+k_1$ | $+k_2$ |
| O1c | $+k_1$ | $-k_3$ |

Für jede Ist-Ankommer-Kantenbeziehung erfolgt eine Optimierungsprüfung, welche am Beispiel der Ankommer-Kante $+k_2$ (Optimierung 01b) dargestellt wird. In der Optimierungsprüfung wird der alte Routentabellenwiderstand der Ankommer-Kante $+k_2$ zum Ziel mit dem Widerstand verglichen, den die Ankommer-Kante haben würde, wenn sie über die Ist-Kante zum Ziel führen würde.

$$R_{RT,Ist(+k_1)} + R_{Kante,Ank(k_2)} < R_{RT_{Alt},Ank(k_2)}$$

wobei

$R_{RT,ist(+k_1)}$      der Widerstand der Ist-Kante $+k_1$ zum Ziel aus der Routentabelle,
$R_{Kante,Ank(k_2)}$      der Kantenwiderstand der Ankommer-Kante $k_2$ und
$R_{RT_{Alt},Ank(k_2)}$      der Widerstand der Ankommer-Kante $+k_2$ aus der Routentabelle ist.

Eine Optimierung erfolgt, wenn die Bedingung erfüllt ist, d.h. der neue Widerstand der Ankommer-Kante kleiner als der alte Widerstand ist. Der Widerstand der Ankommer-Kante wird in der Routentabelle durch den neuen, kleineren Wert ersetzt, als Nachfolgerkante wird die Ist-Kante eingetragen und die optimierte Ankommer-Kante in die Liste 2 aufgenommen.

Sind alle Kanten aus der Liste 1, wie beschrieben, bearbeitet worden, so werden die Listen 1 und 2 vertauscht, d.h. Ausgangspunkt für die nächste Optimierung sind die im letzten Schritt optimierten Kanten. Das Verfahren terminiert, wenn die Liste 1 leer aufgefunden wird, d.h. es gab im vorherigen Durchlauf keine optimierten Kanten.

Nachfolgend soll zunächst das eingangs geschilderte Problem der lediglich suboptimalen Gesamtroute, d.h. Aneinanderreihung von einzelnen, jeweils unabhängig voneinander optimierten Teilrouten, verdeutlicht werden, so daß sich in der anschließenden Beschreibung der Erfindung deren besonderer Effekt gegenüber dem Stand der Technik noch deutlicher abzeichnet.

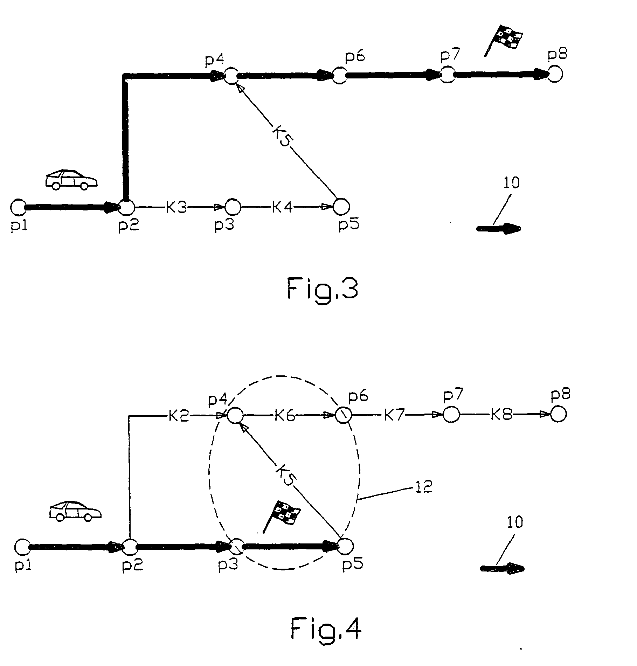

In Fig. 3 ist das zu betrachtende Netz dargestellt, wobei Pfeil 10 eine Routenrichtung bezeichnet. Es wird angenommen, dass sämtliche Kanten den Widerstandswert 10 haben, außer der Kante $k_2$, welche einen Widerstandswert von 15 haben soll. Das Ziel ist die Kante $k_8$. Von der aktuellen Istposition (Kante $k_1$) soll die optimale Route zu dem Ziel $k_8$ bestimmt werden. Bei der Anwendung des zuvor geschilderten Bestwege-Algorithmus nach Ford, Moore und der entsprechenden Optimierungsregel bzgl. des Widerstandes ergibt sich die ebenfalls in Fig. 3 dargestellte Route. Der Gesamtwiderstand beträgt 45.

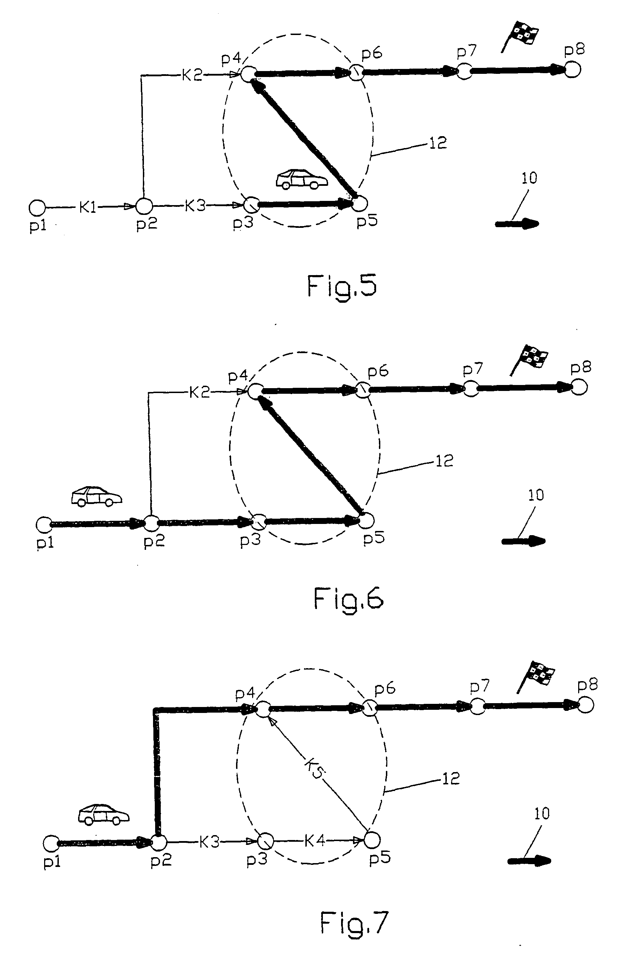

Nun soll das Beispielnetz um ein Zwischenziel 12, bestehend aus den Kanten $k_4$, $k_5$ und $k_6$ erweitert werden, wie in Fig. 4 bis 6 dargestellt. Die Route von der aktuellen Istposition (Kante $k_1$) über das Zwischenziel 12 zum Ziel (Kante $k_8$) teilt sich in zwei nacheinander berechneten Teilrouten auf. Die Berechnung der Teilrouten erfolgt in beiden Fällen wieder nach dem eingangs beschriebenen Verfahren und Optimierungsregeln. Zunächst wird die erste Teilroute von der aktuellen Istposition (Kante $k_1$) zum Zwischenziel 12 bestimmt. Es ergibt sich die in Fig. 4 eingezeichnete, erste Teilroute mit Widerstand 20. Die zweite Teilroute wird von dem Ende der ersten Teilroute am Zwischenziel 12 zum Ziel bestimmt. Sie ist in Fig. 5 eingetragen und hat den Widerstand 40. Durch aneinander fügen der beiden Teilrouten gemäß Fig. 4 und 5 ergibt sich die in Fig. 6 dargestellte Gesamtroute vom Start (Kante $k_1$) über das Zwischenziel 12 zum Ziel (Kante $k_8$). Die sich so ergebende Route weist einen Widerstand von 20 + 40 = 60 auf.

Im Vergleich dieser Gesamtroute gemäß Fig. 6 mit der eingangs berechneten Route gemäß Fig. 3 fällt auf, dass die über das Zwischenziel 12 gefundenen Route nicht die optimale Gesamtroute vom Start (Kante $k_1$) über das Zwischenziel 12 zum Ziel (Kante $k_8$) ist. Die eingangs bestimmte Route gemäß Fig. 3 weist von der Istposition (Kante $k_1$) zum Ziel (Kante $k_8$) einen Widerstandswert von 45 auf und führt ebenfalls über das Zwischenziel 12. Somit wäre diese Route ein bessere Route über das Zwischenziel 12, wie in Fig. 7 veranschaulicht. Dieses Beispiel veranschaulicht, dass bisherige Verfahren zur Routenberechnung nicht in der Lage sind, eine optimale Route von einer Istposition zu einem Ziel über ein vorbestimmtes Zwischenziel zu ermitteln.

Erfindungsgemäß wird nunmehr vorgeschlagen zur Routenberechnung neben den herkömmlichen notwendigen Informationen, nämlich dem beispielsweise aus einer GPS-Ortung erhaltenen Startort und einen von einem Benutzer über eine Benutzerschnittstelle eingegebenen Zielort einen oder mehrere vorbestimmte Übergangsbereiche, nachfolgend als ViaArea bezeichnet, zu verwenden. Die ViaAreas werden beispielsweise über normale, geographische Koordinaten, auf die eine vorbestimmte Geometrie, wie beispielsweise ein Kreis, ein Rechteck, ein Vieleck oder eine Ellipse abgebildet wird, spezifiziert. Neben einer Auswahl aus einem Index über einen Menüpunkt des Navigationssystems hat der Benutzer bevorzugt auch die Möglichkeit einen Punkt aus einer Karte auszuwählen. Auch die Form des ViaAreas, wie beispielsweise Ellipse, Rechteck oder Kreis, ebenso wie die Größe ist zweckmäßigerweise über ein Menü bzw. einen Menüpunkt auswählbar oder direkt in der Karte veränderbar. Hierbei sind folgende Randbedingungen vorgegeben.

Durch entsprechende Luftlinienentfernungen zwischen Ausgangsort, Zielort und ViaArea sind eine maximale und eine minimale Größe eines Gebietes, welches der Benutzer bzw. Fahrer als ViaArea auswählen kann, festgelegt. Eine große Entfernung bedingt höhere Minimal- und Maximalwerte. Falls in dem als ViaArea spezifizierten Gebiet keine geeigneten Kanten als ViaArea-Kanten verfügbar sind, wird das Gebiet so vergrößert, daß mindestens eine geeignete Kante aufgefunden wird.

Die Reihenfolge der von der Route zu tangierenden ViaAreas wird zunächst durch die Reihenfolge der Eingabe festgelegt. Der Benutzer bzw. Fahrer hat ferner die Möglichkeit die Reihenfolge der ViaAreas umzusortieren. Die ViaAreas und deren Reihenfolge werden in einer Übergangsbereich-Indextabelle bzw. ViaArea-IndexTabelle, nachfolgend kurz als VAIT bezeichnet, gespeichert. Anhand der geographischen Beschreibung des ViaAreas werden diesem ViaArea zugeordnete Kanten in einer Übergangsbereich-Beschreibungsliste bzw. ViaAreaDescriptionList, nachfolgend kurz als VADL bezeichnet, gespeichert. In dieser Liste werden neben den Kanten selbst auch vorbestimmte, für die Routenberechnung notwendige Eigenschaften gespeichert. Eine vollständige Beschreibung der ViaAreas ist somit nur durch die VAIT und die VADL gemeinsam gegeben, wobei beide zusammen nachfolgend als Übergangsbereichliste bzw. ViaAreaList oder kurz VAL bezeichnet werden.

Nach der Angabe von Zielort und ggf. Startort und nach Spezifikation der zu nutzenden ViaAreas wird die nachfolgend beschriebene Routensuche mit den gewünschten Kriterien gestartet.

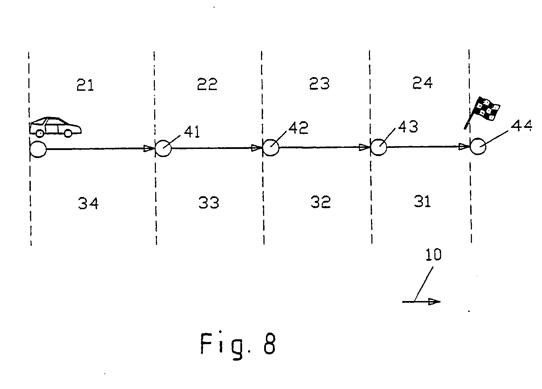

Bei einer ViaArea-Routensuche wird die Gesamtroute in einzelne Abschnitte unterteilt, wie in Fig. 8 dargestellt. Die Grenzen der Abschnitte sind jedoch im Gegensatz zur Zwischenziel-Routensuche gemäß dem Stand der Technik nicht scharf gegeneinander abgegrenzt sondern überlappen sich vielmehr. Es ist jedoch zum besseren Verständnis zweckmä-βig, die ersten bis vierten ViaAreas 41 bis 44 bestimmten Abschnitten zuzuordnen. Die Bezeichnung und Zählung der Abschnitte hängt von der Betrachtungsweise ab. Die Abschnitte bzgl. der Route, nachfolgend als erste bis vierte Routenabschnitte 21 bis 24 bezeichnet, werden von der aktuellen Fahrzeugposition in Zielrichtung gezählt. Bei der Betrachtung der Optimierungssicht werden die Abschnitte vom Zielort aus gezählt, nachfolgend als erste bis vierte Optimierungsabschnitte 31 bis 34 bezeichnet. Im Bereich der ViaAreas ergibt sich eine gewisse Zuordnungsunschärfe, da die Route in beiden Abschnitten beschrieben ist. Ausgehend von der Optimierung, bei welcher die Eigenschaft der Kanten des ViaAreas in Zielrichtung schon bekannt sind, wird diese immer zum zuvor optimierten Abschnitt hinzugezählt. Somit gehört das Ziel selbst zu keinem Abschnitt sondern wird als viertes ViaArea 44 betrachtet.

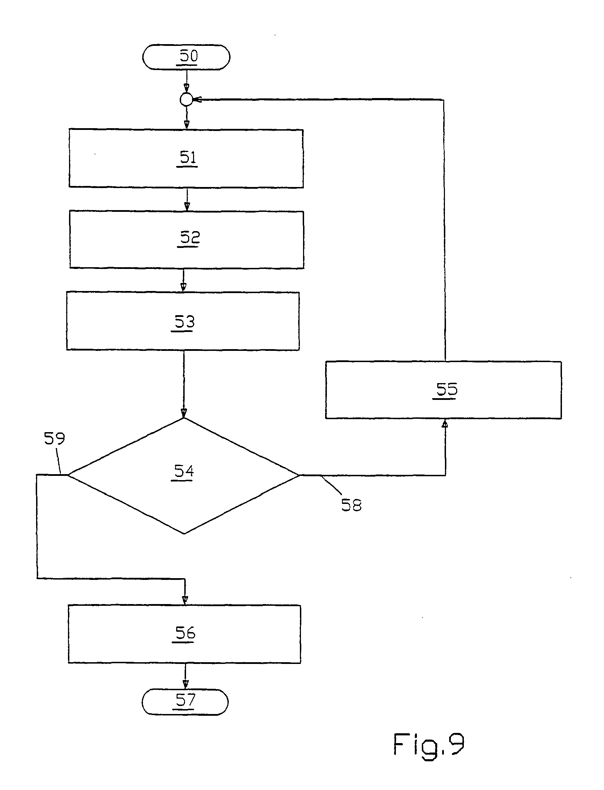

Die erfindungsgemäße ViaArea-Routensuche ist in Fig. 9 als Flußdiagramm veranschaulicht und in folgende Teile untergliedert: Start in Schritt 50, Initialisierung der Routentabelle in Schritt 51, Initialisierung des bzw. der ViaAreas in Schritt 52, Optimierung der Kanten des Graphen in Schritt 53, feststellen ob sämtliche Abschnitte optimiert sind in Schritt 54, falls NEIN in Schritt 54 (Pfad 58) Aktualisieren der ViaArea-Liste in Schritt 55, falls JA in Schritt 54 (Pfad 59) Zusammenstellen der Routenliste in Schritt 56 und Ende in Schritt 57.

Das Verfahren der ViaArea-Routensuche basiert auf einem Bestwege-Algorithmus nach Ford, Moore, wobei zur Beschreibung der Eigenschaften der Kanten des Graphen eine Routentabelle verwendet wird. Um jeden Abschnitt für sich beschreiben zu können, ist für jeden Abschnitt eine Routentabelle vorgesehen, nachfolgend als Routenabschnittstabelle bezeichnet. Zum Verweis zwischen diesen Routenabschnittstabellen wird die VAL benutzt. Ferner sind zum Speichern der zu optimierenden und der bereits optimierten Kanten zwei Listen vorgesehen.

Die Routentabelle enthält die Beschreibung der Eigenschaften sämtlicher Netz-Kanten bezüglich eines Abschnitts der Route zum Ziel. Jede Kante wird durch einen Eintrag abgebildet, welcher die Eigenschaften der Kante sowohl in Pfeilrichtung als auch entgegengesetzt enthält. Die nachfolgende Tabelle veranschaulicht eine grundinitialisierte Routentabelle für M Kanten.

Tab. 6: grundinitialisierte Routentabelle

| Kante | +Widerstand | +Nachfolgekante | -Widerstand | -Nachfolgekante |
|-------|-------------|-----------------|-------------|-----------------|
| $k_1$ | ∞ | - | ∞ | - |
| $k_2$ | ∞ | - | ∞ | - |
| $k_3$ | ∞ | - | ∞ | - |

(fortgesetzt)

| Kante | +Widerstand | +Nachfolgekante | -Widerstand | -Nachfolgekante |
|---|---|---|---|---|
| ... | | | | |
| $k_{M-1}$ | ∞ | - | ∞ | - |
| $k_M$ | ∞ | - | ∞ | - |

Bei der ViaArea-Routensuche wird jeder Routenabschnitt in einer separaten Routentabelle beschrieben, da der Widerstand einer Kante und der Nachfolger zum Ziel für verschiedene Abschnitte unterschiedlich sein kann.

Die Beschreibung der ViaAreas und der Verknüpfung mit den zugehörigen Kanten im Graphen erfolgt durch die miteinander verknüpften ViaAreaIndex Tabellen (VAIT) und ViaArea-DescriptionList (VADL). In der VAIT sind sämtliche ViaAreas enthalten. Durch die Reihenfolge der Einträge in dieser Tabelle wird die Reihenfolge in der Route (ViaArea 1 ist erste ViaArea der Route usw.) bestimmt. Der erste Eintrag enthält keine ViaArea sondern dient lediglich dazu, die Routentabelle des ersten Routenabschnittes zu referenzieren. Der letzte Eintrag in der VAIT ist das eigentliche Ziel, so daß sich die Ablaufsteuerung in der Routensuche vereinfacht. Jeder ViaArea wird in der VAIT eine Routentabelle zugeordnet. Da der letzte Eintrag dem Ziel entspricht und somit keinen korrespondierenden Abschnitt hat, wird diesem vereinbarungsgemäß keine Routenabschnittstabelle zugewiesen.

Tab. 7: Aufbau der ViaAreaIndexTable (VAIT)

| ViaArea-Index | Verweis auf die VADL | Routentabelle |
|---|---|---|
| - | | 1 |
| 1 | | 2 |
| 2 | | 3 |
| 3 | | 4 |
| ... | | ... |
| N-1 | | N |
| N | | - |

Für jede ViaArea wird in der VAIT ein Verweis auf die Liste der zum ViaArea gehörenden Kanten (VADL) gespeichert. Für jede Kante wird neben dem ViaArea-Index der Widerstand zum Ziel für jede der beiden Richtungen gespeichert. Beim Eintrag der Kanten in die Liste werden für beide Richtungen der Widerstand auf unendlich gesetzt.

Tab. 8: Aufbau der ViaAreaDescriptionList (VADL)

| Index | Kante | folg. Index | ViaArea-Index | +Widerstand | -Widerstand |
|---|---|---|---|---|---|
| 1 | | | | ∞ | ∞ |
| 2 | | | | ∞ | ∞ |
| 3 | | | | ∞ | ∞ |
| ... | | | | | |
| M | | | | ∞ | ∞ |

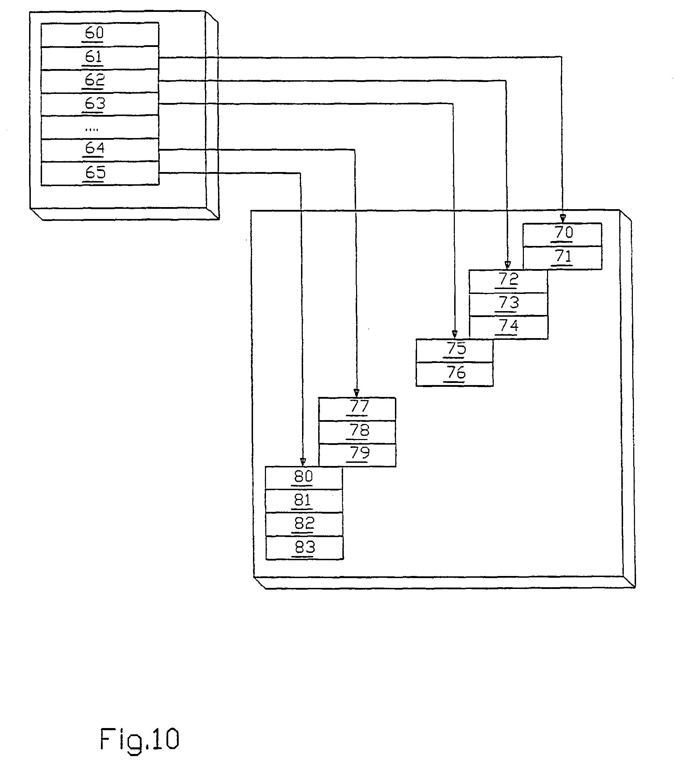

Fig. 10 veranschaulicht den Zusammenhang von VAIT und VADL. Jeder ViaArea (VA) 14 einer VAIT 16 sind entsprechende Kanten in der VADL 18 zugeordnet. Der erste Eintrag 60 der VAIT ist leer. Der ersten ViaArea 61 sind die Kanten K1(VA1) 70 und K2(VA1) 71 zugeordnet. Der zweiten ViaArea 62 sind die Kanten K1 (VA2) 72, K2(VA2) 73 und K3(VA2) 74 zugeordnet. Der dritten ViaArea 63 sind die Kanten K1 (VA3) 75 und K2(VA3) 76 zugeordnet. Der (N-1)ten ViaArea 64 sind die Kanten K1 (VA (N-1)) 77, K2(VA (N-1)) 78 und K3(VA (N-1)) 79 zugeordnet. Die N-te ViaArea 65 entspricht dem Ziel und diesem sind die Kanten K1 (Ziel) 80, K2(Ziel) 81, K2(Ziel) 82 und K3(Ziel) 83 zugeordnet.

Die Optimierung der ViaArea-Routensuche entspricht teilweise der Optimierung einer herkömmlichen Routensuche. Zum Speichern der bereits optimierten Kanten wird, wie bei der herkömmlichen Routensuche, die Liste 1 benutzt.

Die Liste 2 enthält die im nächsten Optimierungsschritt zu prüfenden Kanten. Von einer Ist-Kante werden sämtliche Ankommer-Kanten überprüft, wie zuvor unter Bezugnahme auf Fig. 2 näher erläutert. Da bei der erfindungsgemäßen ViaArea-Routensuche jeder Abschnitt in einer eigenen Routentabelle optimiert wird, kann die Bedingung für eine Optimierung der herkömmlichen Routensuche verwendet werden.

Nachfolgend wird die erfindungsgemäße Routensuche bzw. die Optimierung der Kanten des Graphen im Detail näher erläutert. Zunächst erfolgt die Grundinitialisierung der Routentabelle des aktuellen Abschnitts. Dabei wird der Widerstand auf unendlich gesetzt und der Nachfolger gelöscht (vgl. Tab. 6). Nach dieser Grundinitialisierung der Routentabelle wird der Widerstand der Kanten des letzten ViaAreas aus der VADL (vgl. Tab. 8) in die Routentabelle eingetragen und die Kanten in die Liste der zu optimierenden Kanten aufgenommen. Der Nachfolger dieser Kanten wird auf den Initialisierungswert, d.h. kein Nachfolger, gesetzt, um darzustellen, daß die weitere Routenbeschreibung in der Routentabelle des nächsten Routenabschnittes zu finden ist. Für den ersten zu optimierenden Abschnitt wird der letzte Eintrag der VAIT (vgl. Tab 7) benutzt. Gemäß der Vereinbarung handelt es sich dabei um das Ziel selbst, so daß für den ersten Optimierungsabschnitt keine Sonderbehandlung durchgeführt werden muß.

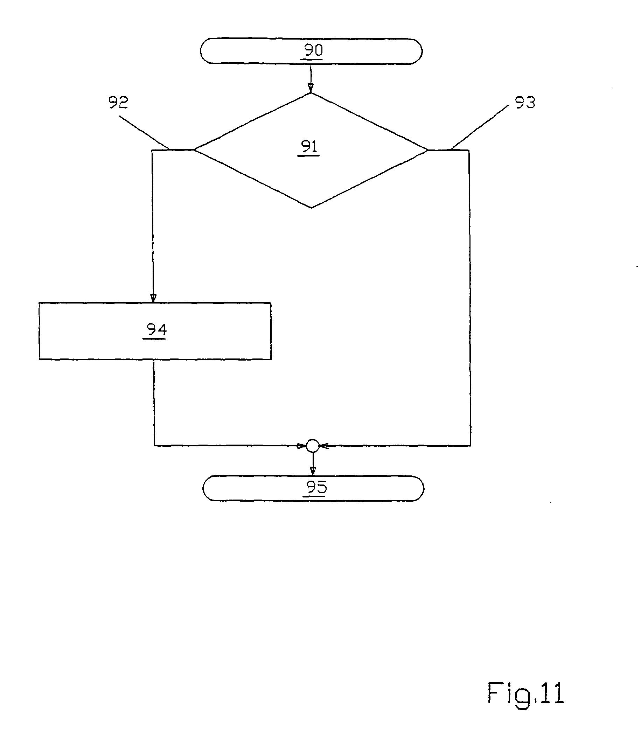

Nach der Initialisierung der Routentabelle und des ViaArea bzw. der VAIT und VADL erfolgt die eigentliche Routensuche. Anhand der in Fig. 11 dargestellten Optimierungsregeln wird die Optimierung des Abschnitts der Route durchgeführt. In Schritt 90 beginnt die Kantenoptimierung. In Schritt 91 wird die folgende Bedingung für die Optimierung geprüft:

$$R_{RT,Ist} + R_{Kante,Ank} < R_{RT_{Alt},Ank}$$

wobei

$R_{RT,ist}$   der Widerstand der Ist-Kante zum Ziel aus der Routentabelle,
$R_{Kante,Ank}$   der Kantenwiderstand der Ankommer-Kante und
$R_{RT_{Alt},Ank}$   der Widerstand der Ankommer-Kante aus der Routentabelle ist.

Mit anderen Worten muß die jeweilige Kante optimiert werden, wenn die Summe aus dem in der Routentabelle eingetragenen Widerstand der Ist-Kante und dem Kantenwiderstand der Ankommer-Kante kleiner als der alte in der Routentabelle eingetragenen Widerstand der Ankommer-Kante ist. Falls das Ergebnis dieser Prüfung "JA" ist, geht es mit Zweig 92 weiter, falls das Ergebnis dieser Prüfung "NEIN" ist, geht es mit Zweig 93 weiter. In Zweig 92 wird in Schritt 94 der entsprechende Eintrag in der Routentabelle aktualisiert, wobei der Widerstand der Ankommer-Kante in der Routentabelle aktualisiert und die Ist-Kante als Nachfolgerkante eingetragen wird. In Schritt 95 endet die Kantenoptimierung.

Die Kantenoptimierung gemäß Fig. 11 erfolgt für alle in der Liste 1 eingetragenen Kanten. Sind alle diese Kanten entsprechend abgearbeitet, dann werden die Liste 1 und die Liste 2 vertauscht, d.h. der Ausgangspunkt für die nächste Optimierung sind die im letzten Schritt optimierten Kanten. Das Verfahren terminiert, wenn die Liste 1 leer aufgefunden wird.

Anschließend wird die VAL in der nachfolgenden Weise aktualisiert. Nach der oben beschriebenen Optimierung der Kanten des Graphen des aktuellen Abschnittes werden die Widerstandswerte des ViaAreas des folgenden Abschnitts in der VADL aktualisiert. Diese Werte stellen den Ausgangspunkt der Optimierung des nächsten Abschnitts dar. Falls es sich beim nächsten Abschnitt um den letzten zu optimierenden Abschnitt, also um den ersten Routenabschnitt, handelt, wird nicht die Aktualisierung der VAL sondern der folgende Schritt ausgeführt:

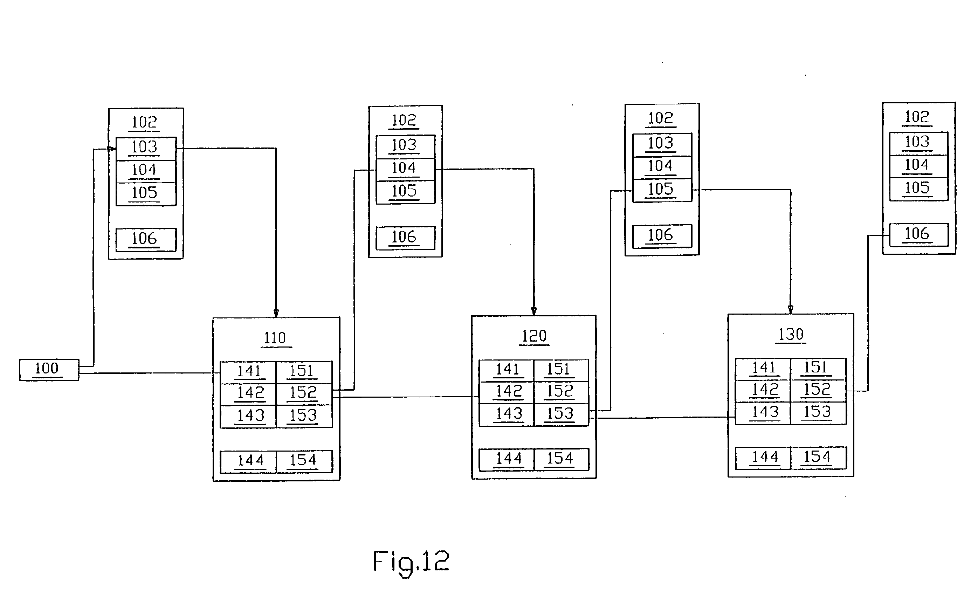

Nach der Optimierung des letzten Optimierungsabschnittes 34 (Fig. 8) wird die Routenliste aus den einzelnen Routentabellen der einzelnen Abschnitte und der VAL erzeugt. Ausgehend von der Kante der aktuellen Fahrzeugposition (Ausgangsort) werden die Kanten entsprechend der Nachfolgerverkettung in der ersten Routentabelle in die Routenliste geschrieben. Die folgende ViaArea ist an der ersten Kante ohne Nachfolger erreicht. Entsprechend der VAIT wird die Routentabelle des nächsten Routenabschnittes ermittelt. In dieser wird ausgehend von der letzten bearbeiteten Kante die Verkettung in Zielrichtung bis zur nächsten Kante ohne Nachfolger weiter verfolgt. Dieses Verfahren wird für jeden Abschnitt durchgeführt. Im letzten Routenabschnitt entspricht die Kante ohne Nachfolger der Zielkante selbst. In der VAIT gibt es dafür keinen Verweis auf eine weitere Routentabelle, so daß die Zusammenstellung der Routenliste beendet wird. Dieses Zusammenstellen der Routenliste aus den einzelnen Routentabellen unter Verwendung von Verknüpfungen aus der VAL ist in Fig. 12 veranschaulicht. Die Route beginnt bei Start 100 (Ausgangsort) und durch Zusammenfügen der einzelnen Routentabellen 110, 120 und 130 der jeweiligen Routenabschnitte 1, 2 und 3 gemäß den Verweisungen in der nach den verschiedenen Routensuchen aktuellen VAL 102 wird die Route zusammengesetzt. Die VAL enthält die Einträge "VA -" 103, "VA 1" 104, "VA 2" 105 für jeweilige ViaAreas (VA) und "Ziel" 106. Die Routentabellen 110, 120, 130 enthalten jeweils die Einträge für die Kanten +k1, +k2, +k3 ... +kn 141 bis 144 und -k1, -k2, -k3 ... -kn 151 bis 154.

Zur weiteren Veranschaulichung des erfindungsgemäßen Verfahrens wird nachfolgend eine konkrete Routensuche gemäß dem erfindungsgemäßen Verfahren im Detail erläutert. Als Ausgangspunkt dient das Beispielnetz gemäß Fig. 6. Für dieses Netz wird angenommen, daß sämtliche Kanten den Widerstand 10 aufweisen, außer Kante $k_2$, welche eine Widerstand von 15 aufweist. Das Ziel ist wieder $k_8$. Von der aktuellen Position soll eine optimale Route zu diesem Ziel unter Berücksichtigung des ViaAreas 14 bestimmt werden. Zum ViaArea 14 gehören die Kanten $k_4$, $k_5$ und $k_6$. Nach der Definition des Ziels und des ViaAreas 14 ergeben sich folgende in der VAL enthaltene VAIT und VADL:

Tab. 9: ViaAreaindexTable (VAIT) nach ViaArea- und Ziel-Definition

| ViaArea-Index | Verweis auf die VADL | Routentabelle |
| --- | --- | --- |
| - | - | 1 |
| 1 | 2 | 2 |
| 2 | 1 | - |

Tab. 10: ViaAreaDescriptionList (VADL) nach ViaArea- und Ziel-Definition

| Index | Kante | folg. Index | ViaArea-Index | +Widerstand | -Widerstand |
| --- | --- | --- | --- | --- | --- |
| 1 | $k_8$ | - | 2 | 0 | 0 |
| 2 | $k_4$ | 3 | 1 | $\infty$ | $\infty$ |
| 3 | $k_5$ | 4 | 1 | $\infty$ | $\infty$ |
| 4 | $k_6$ | - | 1 | $\infty$ | $\infty$ |

Zunächst erfolgt die Grundinitialisierung der Routentabelle des ersten Optimierungsschrittes vom Ziel zum ViaArea gemäß Tab. 11. Dabei wird für jeden Eintrag der Widerstand auf unendlich gesetzt und der Nachfolger gelöscht.

Tab. 11: grundinitialisierte Routentabelle des ersten Optimierungsabschnittes

| Kante | +Widerstand | +Nachfolgekante | -Widerstand | -Nachfolgekante |
| --- | --- | --- | --- | --- |
| $k_1$ | $\infty$ | - | $\infty$ | - |
| $k_2$ | $\infty$ | - | $\infty$ | - |
| $k_3$ | $\infty$ | - | $\infty$ | - |
| $k_4$ | $\infty$ | - | $\infty$ | - |
| $k_5$ | $\infty$ | - | $\infty$ | - |
| $k_6$ | $\infty$ | - | $\infty$ | - |
| $k_7$ | $\infty$ | - | $\infty$ | - |
| $k_8$ | $\infty$ | - | $\infty$ | - |

Bei dem aktuellen Abschnitt handelt es sich um den ersten zu optimierenden Abschnitt, so daß der letzte Eintrag der VAIT benutzt werden muß. Gemäß der Vereinbarung handelt es sich dabei um das Ziel selbst. Nach der Grundinitialisierung wird der Widerstand der Kanten des Ziels aus der VADL in die Routentabelle eingetragen und die Kanten in die Liste 1 (Tab. 13) der zu optimierenden Kanten aufgenommen. Es ergibt sich folgende Routentabelle gemäß Tab 12.:

Tab. 12: Routentabelle des ersten Optimierungsabschnittes nach Zielinitialisierung

| Kante | +Widerstand | +Nachfolgekante | -Widerstand | -Nachfolgekante |
| --- | --- | --- | --- | --- |
| $k_1$ | $\infty$ | - | $\infty$ | - |
| $k_2$ | $\infty$ | - | $\infty$ | - |
| $k_3$ | $\infty$ | - | $\infty$ | - |
| $k_4$ | $\infty$ | - | $\infty$ | - |

(fortgesetzt)

| Kante | +Widerstand | +Nachfolgekante | -Widerstand | -Nachfolgekante |
|---|---|---|---|---|
| $k_5$ | $\infty$ | - | $\infty$ | - |
| $k_6$ | $\infty$ | - | $\infty$ | - |
| $k_7$ | $\infty$ | - | $\infty$ | - |
| $k_8$ | 0 | - | 0 | - |

Tab. 13: Liste 1 zum Speichern der bereits optimierten Kanten

| $+k_8$ | $-k_8$ | | | |
|---|---|---|---|---|

Bei der Optimierung des aktuellen Abschnitts wird die Bedingung gemäß Fig. 11 zugrunde gelegt. Im Optimierungsschritt 1 haben die Liste 1 und Liste 2 folgendes Aussehen:

Tab. 14: Liste 1 zum Speichern der bereits optimierten Kanten

| | $+k_8$ $-k_8$ | | | |
|---|---|---|---|---|

Tab. 15: Liste 2 zum Speichern der im nächsten Schritt zu prüfenden Kanten

| | | | | |
|---|---|---|---|---|

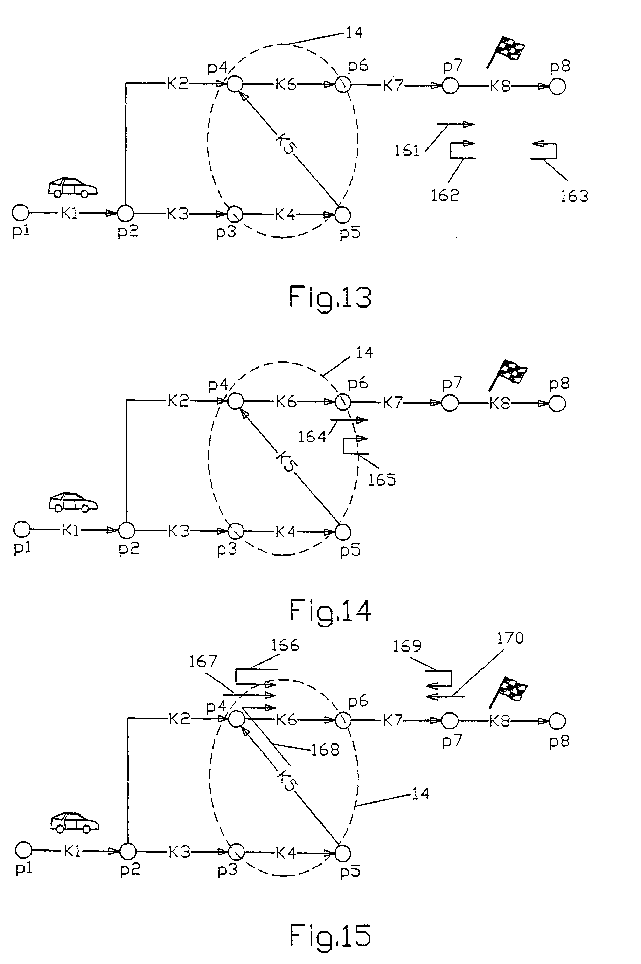

Im Optimierungsschritt 1 erfolgen die gemäß Fig. 13 veranschaulichten Optimierungsschritte O1a 161, O1b 162 und O1c 163. im Optimierungsschritt O1a 161 ergibt sich für die Ankommer-Kante $+k_7$ aus dem Streckenwert dieser Kante und dem Routentabellen-Eintrag der Ist-Kante der folgende neue Wert:

$$R_{RT_{Neu},Ank(+k_7)} = R_{RT,Ist(+k_8)} + R_{Kante,Ank(+k_7)}$$

$$R_{RT_{Neu},Ank(+k_7)} = 0 + 10$$

$$R_{RT_{Neu},Ank(+k_7)} = 10$$

Der neue Widerstandswert der Ankommer-Kante wird entsprechend der Optimierungsbedingung (Fig. 11) mit dem alten Wert dieser Kante verglichen.

$$R_{RT_{Neu},Ank(+k_7)} < R_{RT_{Alt},Ank(+k_7)}$$

$$10 < \infty$$

Die Bedingung ist erfüllt, so daß die Kante optimiert werden muß. Dazu wird der neue Widerstand und der Nachfolger (Ist-Kante) in die Routentabelle eingetragen. Eine Optimierung der Ankommer-Kanten $+k_8$ und $-k_8$ erfolgt in Schritten O1b 162 und O1c 163 nicht, da die Zielkanten immer den kleinsten Widerstand haben. Somit ergibt sich nach dem Optimierungsschritt 1 folgender Zustand für die Routentabelle und die Liste 1 und 2 gemäß Tab. 16 bis 18:

Tab. 16: Routentabelle nach dem Optimierungsschritt 1

| Kante | +Widerstand | +Nachfolgekante | -Widerstand | -Nachfolgekante |
|---|---|---|---|---|
| $k_1$ | $\infty$ | - | $\infty$ | - |
| $k_2$ | $\infty$ | - | $\infty$ | - |
| $k_3$ | $\infty$ | - | $\infty$ | - |
| $k_4$ | $\infty$ | - | $\infty$ | - |
| $k_5$ | $\infty$ | - | $\infty$ | - |
| $k_6$ | $\infty$ | - | $\infty$ | - |
| $k_7$ | 10 | $+k_8$ | $\infty$ | - |
| $k_8$ | 0 | - | 0 | - |

Tab. 17: Liste 1 nach dem Optimierungsschritt 1

| | | | | |
|---|---|---|---|---|
| | | | | |

Tab. 18: Liste 2 nach dem Optimierungsschritt 1

| | | | | |
|---|---|---|---|---|
| $+k_7$ | | | | |

Zum nächsten Optimierungsschritt 2 werden die Liste 1 und Liste 2 miteinander vertauscht gemäß Tab. 19 und 20.

Tab. 19: Liste 1 vor dem Optimierungsschritt 2

| | | | | |
|---|---|---|---|---|
| $+k_7$ | | | | |

Tab. 20: Liste 2 vor dem Optimierungsschritt 2

| | | | | |
|---|---|---|---|---|
| | | | | |

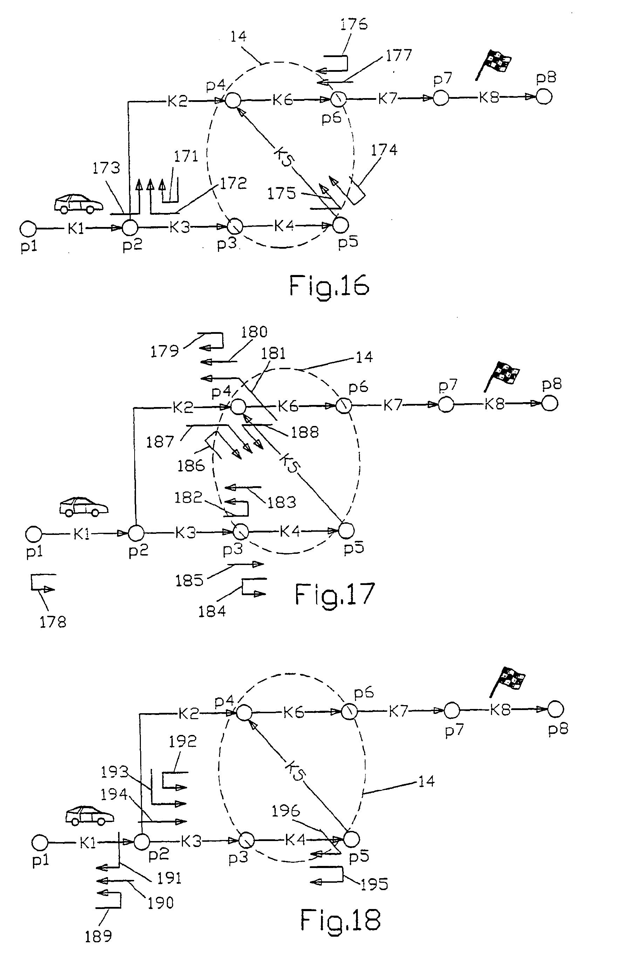

Im Optimierungsschritt 2 erfolgen die gemäß Fig. 14 veranschaulichten Optimierungsschritte 02a 164 und 02b 165 mit Kanten gemäß folgender Tabelle 21:

Tab. 21: Optimierungsschritt 2

| Optimierungsschritt | ist-Kante | Ank-Kante |
|---|---|---|
| O2a | $+k_7$ | $-k_7$ |
| O2b | $+k_7$ | $+k_6$ |

Die Optimierungsschritte O2a 164 O2b 165 entsprechen im wesentlichen derjenigen von Optimierungsschritt 1, so daß diese nicht näher ausgeführt werden. Es ergibt sich nach dem Optimierungsschritt 2 folgender Zustand für die Routentabelle und die Liste 1 und 2 gemäß Tab. 22 bis 24:

Tab. 22: Routentabelle nach dem Optimierungsschritt 2

| Kante | +Widerstand | +Nachfolgekante | -Widerstand | -Nachfolgekante |
|---|---|---|---|---|
| $k_1$ | $\infty$ | - | $\infty$ | - |
| $k_2$ | $\infty$ | - | $\infty$ | - |

(fortgesetzt)

| Kante | +Widerstand | +Nachfolgekante | -Widerstand | -Nachfolgekante |
|-------|-------------|-----------------|-------------|-----------------|
| $k_3$ | $\infty$ | - | $\infty$ | - |
| $k_4$ | $\infty$ | - | $\infty$ | - |
| $k_5$ | $\infty$ | - | $\infty$ | - |
| $k_6$ | 20 | $+k_7$ | $\infty$ | - |
| $k_7$ | 10 | $+k_8$ | 20 | $+k_7$ |
| $k_8$ | 0 | - | 0 | - |

Tab. 23: Liste 1 nach dem Optimierungsschritt 2

| | | | | |
|---|---|---|---|---|
| | | | | |

Tab. 24: Liste 2 nach dem Optimierungsschritt 2

| | | | | |
|---|---|---|---|---|
| $+k_6$ | $-k_7$ | | | |

Zum nächsten Optimierungsschritt 3 werden wieder die Liste 1 und Liste 2 miteinander vertauscht gemäß Tab. 25 und 26.

Tab. 25: Liste 1 vor dem Optimierungsschritt 3

| | | | | |
|---|---|---|---|---|
| $+k_6$ | $-k_7$ | | | |

Tab. 26: Liste 2 vor dem Optimierungsschritt 3

| | | | | |
|---|---|---|---|---|
| | | | | |

Im Optimierungsschritt 3 erfolgen die gemäß Fig. 15 veranschaulichten Optimierungsschritte O3a 166, O3b 167, O3c 168, O3d 169 und O3e 170 mit Kanten gemäß folgender Tabelle 27:

Tab. 27: Optimierungsschritt 3

| Optimierungsschritt | Ist-Kante | Ank-Kante |
|---------------------|-----------|-----------|
| O3a | $+k_6$ | $-k_6$ |
| O3b | $+k_6$ | $+k_2$ |
| O3c | $+k_6$ | $+k_5$ |
| O3d | $-k_7$ | $+k_7$ |
| O3e | $-k_7$ | $-k_8$ |

Für die Ankommer-Kante $+k_7$ bzgl. der Ist-Kante $-k_7$ (O3d 169) ergibt sich aus dem Streckenwert dieser Kante und dem Routentabellen-Eintrag der Ist-Kante der folgende neue Wert:

$$R_{RT_{Neu},Ank(+k_7)} = R_{RT,Ist(-k_7)} + R_{Kante,Ank(+k_7)}$$

$$R_{RT_{Neu},Ank(+k_7)} = 20 + 10$$

$$R_{RT_{Neu},Ank(+k_7)} = 30$$

Der neue Widerstandswert der Ankommer-Kante wird entsprechend der Optimierungsbedingung (Fig. 11) mit dem alten Wert dieser Kante verglichen.

$$R_{RT_{Neu},Ank(+k_7)} < R_{RT_{Alt},Ank(+k_7)}$$

$$30 < 10$$

Da die Bedingung nicht erfüllt ist, erfolgt keine Optimierung. Eine Optimierung der Ankommer-Kante -$k_8$ (03e 170) erfolgt nicht, da die Zielkanten immer den kleinsten Widerstand haben. Es ergibt sich nach dem Optimierungsschritt 3 folgender Zustand für die Routentabelle und die Liste 1 und 2 gemäß Tab. 28 bis 30:

Tab. 28: Routentabelle nach dem Optimierungsschritt 3

| Kante | +Widerstand | +Nachfolgekante | -Widerstand | -Nachfolgekante |
|-------|-------------|-----------------|-------------|-----------------|
| $k_1$ | $\infty$ | - | $\infty$ | - |
| $k_2$ | 35 | $+k_6$ | $\infty$ | - |
| $k_3$ | $\infty$ | - | $\infty$ | - |
| $k_4$ | $\infty$ | - | $\infty$ | - |
| $k_5$ | 30 | $+k_6$ | $\infty$ | - |
| $k_6$ | 20 | $+k_7$ | 30 | $+k_6$ |
| $k_7$ | 10 | $+k_8$ | 20 | $+k_7$ |
| $k_8$ | 0 | - | 0 | - |

Tab. 29: Liste 1 nach dem Optimierungsschritt 3

| | | | | |
|---|---|---|---|---|
| | | | | |

Tab. 30: Liste 2 nach dem Optimierungsschritt 3

| | | | | |
|---|---|---|---|---|
| $+k_2$ | $+k_5$ | $-k_6$ | | |

Zum nächsten Optimierungsschritt 4 werden wieder die Liste 1 und Liste 2 miteinander vertauscht gemäß Tab. 31 und 32.

Tab. 31: Liste 1 vor dem Optimierungsschritt 4

| | | | | |
|---|---|---|---|---|
| $+k_2$ | $+k_5$ | $-k_6$ | | |

Tab. 32: Liste 2 vor dem Optimierungsschritt 4

| | | | | |
|---|---|---|---|---|
| | | | | |

Im Optimierungsschritt 4 erfolgen die gemäß Fig. 16 veranschaulichten Optimierungsschritte O4a 171, O4b 172, O4c 173, O4d 174, O4e 175, O4f 176 und O4g 177 mit Kanten gemäß folgender Tabelle 33:

Tab. 33: Optimierungsschritt 4

| Optimierungsschritt | Ist-Kante | Ank-Kante |
|---|---|---|
| O4a | $+k_2$ | $-k_2$ |
| O4b | $+k_2$ | $-k_3$ |
| O4c | $+k_2$ | $+k_1$ |
| O4d | $+k_5$ | $-k_5$ |
| O4e | $+k_5$ | $+k_4$ |
| O4f | $-k_6$ | $+k_6$ |
| O4g | $-k_6$ | $-k_7$ |

Für die Ankommer-Kanten $+k_2$ und $+k_5$ (04a bis 04e) ergibt sich die Notwendigkeit einer Optimierung. Für die Ankommer-Kante $-k_6$ (04f und 04g) ist keine Optimierung erforderlich, da der aktuelle Widerstand der Ankommer-Kante in der Routentabelle kleiner als der neue ist. Es ergibt sich nach dem Optimierungsschritt 4 folgender Zustand für die Routentabelle und die Liste 1 und 2 gemäß Tab. 34 bis 36:

Tab. 34: Routentabelle nach dem Optimierungsschritt 4

| Kante | +Widerstand | +Nachfolgekante | -Widerstand | -Nachfolgekante |
|---|---|---|---|---|
| $k_1$ | 45 | $+k_2$ | $\infty$ | - |
| $k_2$ | 35 | $+k_6$ | 60 | $+k_2$ |
| $k_3$ | $\infty$ | - | 45 | $+k_2$ |
| $k_4$ | 40 | $+k_5$ | $\infty$ | - |
| $k_5$ | 30 | $+k_6$ | 40 | $+k_5$ |
| $k_6$ | 20 | $+k_7$ | 30 | $+k_6$ |
| $k_7$ | 10 | $+k_8$ | 20 | $+k_7$ |
| $k_8$ | 0 | - | 0 | - |

Tab. 35: Liste 1 nach dem Optimierungsschritt 4

| | | | | |
|---|---|---|---|---|
| | | | | |

Tab. 36: Liste 2 nach dem Optimierungsschritt 4

| $+k_1$ | $-k_2$ | $-k_3$ | $+k_4$ | $-k_5$ |
|---|---|---|---|---|

Zum nächsten Optimierungsschritt 5 werden wieder die Liste 1 und Liste 2 miteinander vertauscht gemäß Tab. 37 und 38.

Tab. 37: Liste 1 vor dem Optimierungsschritt 5

| $+k_1$ | $-k_2$ | $-k_3$ | $+K_4$ | $-k_5$ |
|---|---|---|---|---|

Tab. 38: Liste 2 vor dem Optimierungsschritt 5

| | | | | |
|---|---|---|---|---|
| | | | | |

Im Optimierungsschritt 5 erfolgen die gemäß Fig. 17 veranschaulichten Optimierungsschritte O5a 178, O5b 179, O5c 180, O5d 181, O5e 182, O5f 183, O5g 184, O5h 185, O5i 186, O5k 187 und O5l 188 mit Kanten gemäß folgender Tabelle 39:

Tab. 39: Optimierungsschritt 5

| Optimierungsschritt | Ist-Kante | Ank-Kante |
|---|---|---|
| O5a | $+k_1$ | $-k_1$ |
| O5b | $-k_2$ | $+k_2$ |
| O5c | $-k_2$ | $-k_6$ |
| O5d | $-k_2$ | $+k_5$ |
| O5e | $-k_3$ | $+k_3$ |
| O5f | $-k_3$ | $-k_4$ |
| O5g | $+k_4$ | $-k_4$ |
| O5h | $+k_4$ | $+k_3$ |
| O5i | $-k_5$ | $+k_5$ |
| O5k | $-k_5$ | $+k_2$ |
| O5l | $-k_5$ | $-k_6$ |

Für die Ankommer-Kante $-k_1$ bzgl. der Ist-Kante $+k_1$ (O5a) ist eine Optimierung notwendig, da der Widerstand dieser Ankommer-Kante noch den Wert unendlich hat. Für die Ankommer-Kanten und Ist-Kanten der Optimierungsschritte O5b bis O5d ergibt sich keine Notwendigkeit der Optimierung, da der aktuelle Widerstand der jeweiligen Ankommer-Kante in der Routentabelle kleiner ist als der neue Widerstand. Für die Ankommer-Kanten und Ist-Kanten der Optimierungsschritte O5e und O5f ergibt sich die Notwendigkeit der Optimierung, da der Widerstand der jeweiligen Ankommer-Kante noch den Wert unendlich hat.

Nach den Optimierungsschritten O5a bis 05f ergibt sich folgender Zustand für die Routentabelle gemäß Tab. 40.

Tab. 40: Zwischenzustand der Routentabelle in Optimierungsschritt 5

| Kante | +Widerstand | +Nachfolgekante | -Widerstand | -Nachfolgekante |
|---|---|---|---|---|
| $k_1$ | 45 | $+k_2$ | 55 | $+k_1$ |
| $k_2$ | 35 | $+k_6$ | 60 | $+k_2$ |
| $k_3$ | 55 | $-k_3$ | 45 | $+k_2$ |
| $k_4$ | 40 | $+k_5$ | 55 | $-k_3$ |
| $k_5$ | 30 | $+k_6$ | 40 | $+k_5$ |
| $k_6$ | 20 | $+k_7$ | 30 | $+k_6$ |
| $k_7$ | 10 | $+k_8$ | 20 | $+k_7$ |
| $k_8$ | 0 | - | 0 | - |

Die Ankommerkanten $+k_3$ und $-k_4$ stellen in den folgenden Optimierungsschritten 05g und 05h erneut Ankommer-Kanten dar. Für die Ankommer-Kanten $-k_4$ und $+k_3$ bzgl. der Ist-Kante $+k_4$ ergeben sich aus dem Streckenwert dieser Kanten und dem Routentabellen-Eintrag der Ist-Kante die folgenden neuen Werte:

$$R_{RT_{Neu},Ank(-k_4)} = R_{RT,Ist(+k_4)} + R_{Kante,Ank(-k_4)}$$

$$R_{RT_{Neu},Ank(-k_4)} = 40 + 10$$

$$R_{RT_{Neu},Ank(-k_4)} = 50$$

$$R_{RT_{Neu},Ank(+k_3)} = R_{RT,Ist(+k_4)} + R_{Kante,Ank(+k_3)}$$

$$R_{RT_{Neu},Ank(+k_3)} = 40 + 10$$

$$R_{RT_{Neu},Ank(+k_3)} = 50$$

Der neue Widerstandswert der Ankommer-Kanten wird entsprechend der Optimierungsbedingung (Fig. 11) mit dem alten Wert dieser Kanten verglichen.

$$R_{RT_{Neu},Ank(-k_4)} < R_{RT_{Alt},Ank(-k_4)}$$

$$50 < 55$$

$$R_{RT_{Neu},Ank(+k_3)} < R_{RT_{Alt},Ank(+k_3)}$$

$$50 < 55$$

Da die Bedingung jeweils erfüllt ist, muß in beiden Fällen eine Optimierung erfolgen.

Für die Ankommer-Kanten und Ist-Kanten der Optimierungsschritte 05i bis 05k ergibt sich keine Notwendigkeit der Optimierung, da der aktuelle Widerstand der jeweiligen Ankommer-Kante in der Routentabelle kleiner als der neue Widerstand ist. Es ergibt sich nach dem Optimierungsschritt 5 folgender Zustand für die Routentabelle und die Liste 1 und 2 gemäß Tab. 41 bis 43:

Tab. 41: Routentabelle nach dem Optimierungsschritt 5

| Kante | +Widerstand | +Nachfolgekante | -Widerstand | -Nachfolgekante |
|-------|-------------|-----------------|-------------|-----------------|
| $k_1$ | 45 | $+k_2$ | 55 | $+k_1$ |
| $k_2$ | 35 | $+k_6$ | 60 | $+k_2$ |
| $k_3$ | 50 | $+k_4$ | 45 | $+k_2$ |
| $k_4$ | 40 | $+k_5$ | 50 | $+k_4$ |
| $k_5$ | 30 | $+k_6$ | 40 | $+k_5$ |

(fortgesetzt)

| Kante | +Widerstand | +Nachfolgekante | -Widerstand | -Nachfolgekante |
|-------|-------------|-----------------|-------------|-----------------|
| $k_6$ | 20 | $+k_7$ | 30 | $+k_6$ |
| $k_7$ | 10 | $+k_8$ | 20 | $+k_7$ |
| $k_8$ | 0 | - | 0 | - |

Tab. 42: Liste 1 nach dem Optimierungsschritt 5

| | | | | |
|--|--|--|--|--|
| | | | | |

Tab. 43: Liste 2 nach dem Optimierungsschritt 5

| | | | | |
|--|--|--|--|--|
| $-k_1$ | $+k_3$ | $-k_4$ | | |

Zum nächsten Optimierungsschritt 5 werden wieder die Liste 1 und Liste 2 miteinander vertauscht gemäß Tab. 37 und 38.

Tab. 44: Liste 1 vor dem Optimierungsschritt 6

| | | | | |
|--|--|--|--|--|
| $-k_1$ | $+k_3$ | $-k_4$ | | |

Tab. 45: Liste 2 vor dem Optimierungsschritt 6

| | | | | |
|--|--|--|--|--|
| | | | | |

Im Optimierungsschritt 5 erfolgen die gemäß Fig. 18 veranschaulichten Optimierungsschritte 06a 189, 06b 190, 06c 191, 06d 192, 06e 193, 06f 194, 06g 195 und 06h 196 mit Kanten gemäß folgender Tabelle 46:

Tab. 46: Optimierungsschritt 6

| Optimierungsschritt | Ist-Kante | Ank-Kante |
|---------------------|-----------|-----------|
| O6a | $-k_1$ | $+k_1$ |
| O6b | $-k_1$ | $-k_3$ |
| O6c | $-k_1$ | $-k_2$ |
| O6d | $+k_3$ | $-k_3$ |
| O6e | $+k_3$ | $-k_2$ |
| O6f | $+k_3$ | $+k_1$ |
| O6g | $-k_4$ | $+k_4$ |
| O6h | $-k_4$ | $-k_5$ |

In keinem der Optimierungsschritte 06a bis 06h ist die Optimierungsbedingung erfüllt, so daß keine weitere Optimierung erfolgt. Es ergibt sich nach dem Optimierungsschritt 6 folgender Zustand für die Routentabelle und die Liste 1 und 2 gemäß Tab. 47 bis 49:

Tab. 47: Routentabelle nach dem Optimierungsschritt 6

| Kante | +Widerstand | +Nachfolgekante | -Widerstand | -Nachfolgekante |
|-------|-------------|-----------------|-------------|-----------------|
| $k_1$ | 45 | $+k_2$ | 55 | $+k_1$ |
| $k_2$ | 35 | $+k_6$ | 60 | $+k_2$ |

(fortgesetzt)

| Kante | +Widerstand | +Nachfolgekante | -Widerstand | -Nachfolgekante |
|-------|-------------|-----------------|-------------|-----------------|
| $k_3$ | 50 | $+k_4$ | 45 | $+k_2$ |
| $k_4$ | 40 | $+k_5$ | 50 | $+k_4$ |
| $k_5$ | 30 | $+k_6$ | 40 | $+k_5$ |
| $k_6$ | 20 | $+k_7$ | 30 | $+k_6$ |
| $k_7$ | 10 | $+k_8$ | 20 | $+k_7$ |
| $k_8$ | 0 | - | 0 | - |

Tab. 48: Liste 1 nach dem Optimierungsschritt 6

| | | | | |
|--|--|--|--|--|
| | | | | |

Tab. 49: Liste 2 nach dem Optimierungsschritt 6

| | | | | |
|--|--|--|--|--|
| | | | | |

Nach dem Optimierungsschritt 6 ist somit die Liste 2 und damit die Liste der zu prüfenden Kanten leer, so daß das Ende-Kriterium für den ersten Abschnitt der erfindungsgemäßen ViaArea-Routensuche erfüllt und terminiert ist. Die Routentabelle dieses Abschnitts (Tab. 47) wird gesichert.

Nach der Optimierung sämtlicher Kanten des Graphen des aktuellen Abschnittes werden die Widerstandswerte und Nachfolger des ViaAreas des letzten Abschnitts in der VADL aktualisiert. Diese Werte stellen den Ausgangspunkt der Optimierung des nächsten zu optimierenden Abschnittes dar. Es ergibt sich die folgende VAL, gemäß Tab. 50 und 51

Tab. 50: ViaAreaIndexTable (VAIT) nach Optimierung des ersten Abschnittes

| ViaArea-Index | Verweis auf die VADL | Routentabelle |
|---------------|----------------------|---------------|
| - | - | 1 |
| 1 | 2 | 2 |
| 2 | 1 | - |

Tab. 51: ViaAreaDescriptionList (VADL) nach Optimierung des ersten Abschnittes

| Index | Kante | folg. Index | ViaArea-Index | +Widerstand | -Widerstand |
|-------|-------|-------------|---------------|-------------|-------------|
| 1 | $k_8$ | - | 2 | 0 | 0 |
| 2 | $k_4$ | 3 | 1 | 40 | 50 |
| 3 | $k_5$ | 4 | 1 | 30 | 40 |
| 4 | $k_6$ | - | 1 | 20 | 30 |

Für den zweiten Optimierungsabschnitt von dem ViaArea ausgehend erfolgt wieder zunächst die Grundinitialisierung der Routentabelle in den Zustand gemäß Tab. 52., wobei der Widerstand auf unendlich gesetzt und der Nachfolger gelöscht wird.

Tab. 52: grundinitialisierte Routentabelle des zweiten Optimierungsabschnittes

| Kante | +Widerstand | +Nachfolgekante | -Widerstand | -Nachfolgekante |
|-------|-------------|-----------------|-------------|-----------------|
| $k_1$ | $\infty$ | - | $\infty$ | - |
| $k_2$ | $\infty$ | - | $\infty$ | - |

(fortgesetzt)

| Kante | +Widerstand | +Nachfolgekante | -Widerstand | -Nachfolgekante |
|-------|-------------|-----------------|-------------|-----------------|
| $k_3$ | ∞ | - | ∞ | - |
| $k_4$ | ∞ | - | ∞ | - |
| $k_5$ | ∞ | - | ∞ | - |
| $k_6$ | ∞ | - | ∞ | - |
| $k_7$ | ∞ | - | ∞ | - |
| $k_8$ | ∞ | - | ∞ | - |

Nach dieser Grundinitialisierung der Routentabelle wird der Widerstand der Kanten des letzten ViaAreas aus der VADL in die Routentabelle eingetragen und die Kanten in die Liste der zu optimierenden Kanten aufgenommen. Es ergibt sich die Routentabelle gemäß Tab. 53.

Tab. 53: Routentabelle des zweiten Optimierungsabschnittes nach Initialisierung des ViaAreas

| Kante | +Widerstand | +Nachfolgekante | -Widerstand | -Nachfolgekante |
|-------|-------------|-----------------|-------------|-----------------|
| $k_1$ | ∞ | - | ∞ | - |
| $k_2$ | ∞ | - | ∞ | - |
| $k_3$ | ∞ | - | ∞ | - |
| $k_4$ | 40 | - | 50 | - |
| $k_5$ | 30 | - | 40 | - |
| $k_6$ | 20 | - | 30 | - |
| $k_7$ | ∞ | - | ∞ | - |
| $k_8$ | ∞ | - | ∞ | - |

Ferner werden die dem ViaArea 14 zugeordneten Kanten in die Liste 1 gemäß Tab. 54 geschrieben. Die Liste 2 ist gemäß Tab. 55 noch leer.

Tab. 54: Liste 1 zum Speichern der bereits optimierten Kanten

| $+k_4$ | $-k_4$ | $+k_5$ | $-k_5$ | $+k_6$ | $-k_6$ | |
|--------|--------|--------|--------|--------|--------|--|

Tab. 55: Liste 2 zum Speichern der im nächsten Schritt zu prüfenden Kanten

| | | | | | |
|--|--|--|--|--|--|

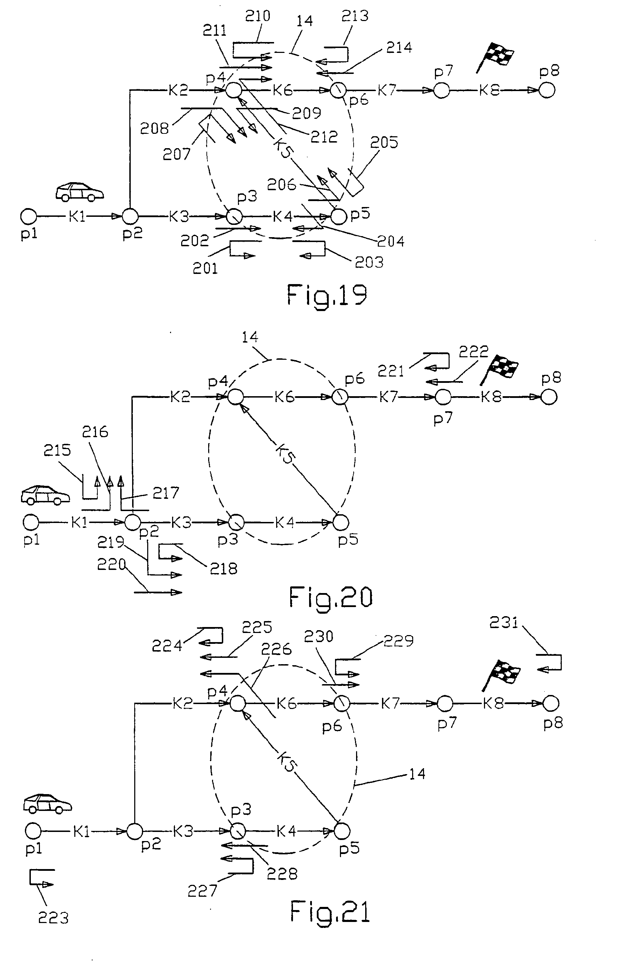

Bei der Optimierung des zweiten Abschnitts wird wiederum die Bedingung gemäß Fig. 11 angewendet. Im Optimierungsschritt 7 erfolgen die gemäß Fig. 19 veranschaulichten Optimierungsschritte O7a 201, O7b 202, O7c 203, O7d 204, O7e 205, O7f 206, O7g 207 und O7h 208, O7i 209, O7k 210, O7l 211, O7m 212, O7n 213 und O7o 214 mit Kanten gemäß folgender Tabelle 56:

Tab. 56: Optimierungsschritt 7

| Optimierungsschritt | Ist-Kante | Ank-Kante |
|---------------------|-----------|-----------|
| O7a | $+k_4$ | $-k_4$ |
| O7b | $+k_4$ | $+k_3$ |
| O7c | $-k_4$ | $+k_4$ |
| O7d | $-k_4$ | $-k_5$ |

(fortgesetzt)

| Optimierungsschritt | Ist-Kante | Ank-Kante |
|---|---|---|
| O7e | $+k_5$ | $-k_5$ |
| O7f | $+k_5$ | $+k_4$ |
| O7g | $-k_5$ | $+k_5$ |
| O7h | $-k_5$ | $^+k_2$ |
| O7i | $-k_5$ | $-k_5$ |
| O7k10 | $+k_6$ | $-k_6$ |
| O7111 | $+k_6$ | $+k_2$ |
| O7m 12 | $+k_6$ | $+k_5$ |
| O7n13 | $-k_6$ | $^+k_6$ |
| O7o14 | $-k_6$ | $-k_7$ |

Bzgl. der Optimierungsschritte O7a 201 und O7b 202 ergibt sich nur für die Ankommer-Kante $+k_3$ (O7b 202) die Notwendigkeit der Optimierung, da diese Ankommer-Kante noch einen unendlichen Widerstand aufweist. Für die Ankommer-Kante $-k_4$ (O7a 201) kann sich der Widerstand nicht verbessern, da diese schon im vorherigen Abschnitt optimiert wurde. Bei den Optimierungsschritten O7c 203 und O7d 204 ergibt sich bzgl. der jeweiligen Ankommer-Kanten $+k_4$ und $-k_5$ keine Optimierungsnotwendigkeit, da diese Ankommer-Kanten als Kanten des letzten ViaAreas schon optimal sind. Gleiches gilt analog für die Optimierungsschritte O7e 205 und O7f 206 mit den Ankommer-Kanten $+k_4$ und $-k_5$. Für die Ankommer-Kanten $+k_5$ und $-k_6$ der Optimierungsschritte O7g 207 und O7i 209 ergibt sich keine Optimierungsnotwendigkeit, da diese Ankommer-Kanten als Kanten des letzten ViaAreas schon optimal sind. Für die Ankommer-Kante $+k_2$ des Optimierungsschrittes O7h 208 ergibt sich aus dem Streckenwert die ser Kante und dem Routentabellen-Eintrag der Ist-Kante $-k_5$ der folgende neue Wert:

$$R_{RT_{Neu},Ank(+k_2)} = R_{RT,Ist(-k_5)} + R_{Kante,Ank(+k_2)}$$

$$R_{RT_{Neu},Ank(+k_2)} = 40 + 10$$

$$R_{RT_{Neu},Ank(+k_2)} = 50$$

Der neue Widerstandswert der Ankommer-Kante wird entsprechend der Optimierungsbedingung (Fig. 11) mit dem alten Wert dieser Kante verglichen.

$$R_{RT_{Neu},Ank(+k_2)} < R_{RT_{Alt},Ank(+k_2)}$$

$$50 < \infty$$

Die Bedingung ist erfüllt, so daß diese Kante optimiert werden muß.

Für die Ankommer-Kanten $+k_5$ und $-k_6$ der Optimierungsschritte 07k 210 und O7m 212 ergibt sich keine Optimierungsnotwendigkeit, da diese Ankommer-Kanten als Kanten des letzten ViaAreas schon optimal sind. Für die Ankommer-Kante $+k_2$ des Optimierungsschrittes O7l 211 ergibt sich aus dem Streckenwert dieser Kante und dem Routentabellen-Eintrag der Ist-Kante $+k_6$ der folgende neue Wert:

$$R_{RT_{Neu},Ank(+k_2)} = R_{RT,Ist(+k_6)} + R_{Kante,Ank(+k_2)}$$

$$R_{RT_{Neu},Ank(+k_2)} = 30 + 10$$

$$R_{RT_{Neu},Ank(+k_2)} = 40$$

Der neue Widerstandswert der Ankommer-Kante wird entsprechend der Optimierungsbedingung (Fig. 11) mit dem alten Wert dieser Kante verglichen.

$$R_{RT_{Neu},Ank(+k_2)} < R_{RT_{Alt},Ank(+k_2)}$$

$$40 < 50$$

Die Bedingung ist erfüllt, so daß die Kante optimiert werden muß.

Bzgl. der Ist-Kante $-k_6$ (Optimierungsschritte O7n 213 und O7o 214) ergibt sich nur für die Ankommer-Kante $-k_7$ (O7o 214) die Notwendigkeit der Optimierung, da diese Ankommer-Kante noch einen unendlichen Widerstandswert aufweist. Für die Ankommer-Kante $+k_6$ (O7n 213) kann sich der Widerstand nicht verbessern, da diese Ankommer-Kante schon im vorherigen ersten Abschnitt optimiert wurde.

Es ergibt sich somit nach dem Optimierungsschritt 7 folgender Zustand der Routentabelle und der Liste 1 und 2 gemäß Tab. 57 bis 59.

Tab. 57: Routentabelle nach dem Optimierungsschritt 7

| Kante | +Widerstand | +Nachfolgekante | -Widerstand | -Nachfolgekante |
|-------|-------------|-----------------|-------------|-----------------|
| $k_1$ | $\infty$ | - | $\infty$ | - |
| $k_2$ | 35 | $+k_6$ | $\infty$ | - |
| $k_3$ | 50 | $+k_4$ | $\infty$ | - |
| $k_4$ | 40 | - | 50 | - |
| $k_5$ | 30 | - | 40 | - |
| $k_6$ | 20 | - | 30 | - |
| $k_7$ | $\infty$ | - | 40 | $-k_6$ |
| $k_8$ | $\infty$ | - | $\infty$ | - |

Tab. 58: Liste 1 nach dem Optimierungsschritt 7

| | | | | |
|--|--|--|--|--|
| | | | | |

Tab. 59: Liste 2 nach dem Optimierungsschritt 7

| $+k_2$ | $+k_3$ | $-k_7$ | | | | |
|--------|--------|--------|--|--|--|--|

Zum nächsten Optimierungsschritt 8 werden wieder die Liste 1 und Liste 2 miteinander vertauscht gemäß Tab. 60 und 61.

Tab. 60: Liste 1 vor dem Optimierungsschritt 8

| $+k_2$ | $+k_3$ | $-k_7$ | | | | |
|--------|--------|--------|--|--|--|--|

Tab. 61: Liste 2 vor dem Optimierungsschritt 8

| | | | | |
|--|--|--|--|--|

Im Optimierungsschritt 8 erfolgen die gemäß Fig. 20 veranschaulichten Optimierungsschritte 08a 178, O8b 179, O8c 180, O8d 181, O8e 182, O8f 183, O8g 184 und O8h 185 mit Kanten gemäß folgender Tabelle 62:

Tab. 62: Optimierungsschritt 8

| Optimierungsschritt | ist-Kante | Ank-Kante |
|---------------------|-----------|-----------|
| O8a | $+k_2$ | $-k_2$ |
| O8b | $+k_2$ | $+k_1$ |
| O8c | $+k_2$ | $-k_3$ |
| O8d | $+k_3$ | $-k_3$ |
| O8e | $+k_3$ | $-k_2$ |
| O8f | $+k_3$ | $+k_1$ |
| O8g | $-k_7$ | $+k_7$ |
| O8h | $-k_7$ | $-k_8$ |

Für die Ankommer-Kanten der Optimierungsschritte 07a 215 bis 07c 217 ergibt sich die Notwendigkeit der Optimierung, da der Widerstand dieser jeweiligen Ankommer-Kanten noch unendlich ist. Gleiches gilt für die Ankommer-Kante $-k_3$ des Optimierungsschrittes 08d 218. Für die Ankommer-Kante $-k_2$ des Optimierungsschrittes 08e 219 ergibt sich aus dem Streckenwert dieser Kante und dem Routentabellen-Eintrag der Ist-Kante $+k_3$ der folgende neue Wert:

$$R_{RT_{Neu},Ank(-k_2)} = R_{RT,Ist(+k_3)} + R_{Kante,Ank(-k_2)}$$

$$R_{RT_{Neu},Ank(-k_2)} = 50 + 15$$

$$R_{RT_{Neu},Ank(-k_2)} = 65$$

Der neue Widerstandswert der Ankommer-Kante wird entsprechend der Optimierungsbedingung (Fig. 11) mit dem alten Wert dieser Kante verglichen.

$$R_{RT_{Neu},Ank(-k_2)} < R_{RT_{Alt},Ank(-k_2)}$$

$$65 < 50$$

Da die Bedingung nicht erfüllt ist, darf die Kante nicht optimiert werden. Für die Ankommer-Kante $+k_1$ des Optimierungsschrittes O8F 220 ergibt sich analog dieses Ergebnis. Für die Ankommer-Kanten und Ist-Kanten der Optimierungsschritte O8g 221 und 08h 222 ergibt sich ebenfalls die Notwendigkeit der Optimierung, da der Widerstand der jeweiligen Ankommer-Kanten noch unendlich ist.

Es ergibt sich somit nach dem Optimierungsschritt 8 folgender Zustand der Routentabelle und der Liste 1 und 2 gemäß Tab. 63 bis 65.

Tab. 63: Routentabelle nach dem Optimierungsschritt 8

| Kante | +Widerstand | +Nachfolgekante | -Widerstand | -Nachfolgekante |
|---|---|---|---|---|
| $k_1$ | 45 | $+k_2$ | $\infty$ | - |
| $k_2$ | 35 | $+k_6$ | 50 | $+k_2$ |
| $k_3$ | 50 | $+k_4$ | 45 | $+k_2$ |
| $k_4$ | 40 | - | 50 | - |
| $k_5$ | 30 | - | 40 | - |
| $k_6$ | 20 | - | 30 | - |
| $k_7$ | 50 | $-k_7$ | 40 | $-k_6$ |
| $k_8$ | $\infty$ | - | 50 | $-k_7$ |

Tab. 64: Liste 1 nach dem Optimierungsschritt 8

| | | | | |
|---|---|---|---|---|
| | | | | |

Tab. 65: Liste 2 nach dem Optimierungsschritt 8

| $+k_1$ | $-k_2$ | $-k_3$ | $+k_7$ | $-k_8$ | | |
|---|---|---|---|---|---|---|

Zum nächsten Optimierungsschritt 8 werden wieder die Liste 1 und Liste 2 miteinander vertauscht gemäß Tab. 66 und 67.

Tab. 66: Liste 1 vor dem Optimierungsschritt 9

| $+k_1$ | $-k_2$ | $-k_3$ | $+k_7$ | $-k_8$ | | |
|---|---|---|---|---|---|---|

Tab. 67: Liste 2 vor dem Optimierungsschritt 9

| | | | | |
|---|---|---|---|---|
| | | | | |

Im Optimierungsschritt 9 erfolgen die gemäß Fig. 21 veranschaulichten Optimierungsschritte 09a 223, 09b 224, 09c 225, 09d 226, 09e 227, O9f 228, O9g 229, O9h 230 und O9i 231 mit Kanten gemäß folgender Tabelle 67:

Tab. 67: Optimierungsschritt 9

| Optimierungsschritt | Ist-Kante | Ank-Kante |
|---|---|---|
| O9a | $+k,$ | $-k_1$ |
| O9b | $-k_2$ | $+k_2$ |
| O9c | $-k_2$ | $-k_6$ |
| O9d | $-k_2$ | $+k_5$ |
| O9e | $-k_3$ | $+k_3$ |
| O9f | $-k_3$ | $-k_4$ |
| O9g | $+k_7$ | $-k_7$ |

(fortgesetzt)

| Optimierungsschritt | Ist-Kante | Ank-Kante |
|---|---|---|
| O9h | $+k_7$ | $+k_6$ |
| O9i | $-k_8$ | $+k_8$ |

Für die Ankommer-Kante $-k_1$ des Optimierungsschrittes O9a 223 bzgl. der Ist-Kante $+k_1$ ergibt sich Optimierungsnotwendigkeit, da die Ankommer-Kante $-k_1$ noch den Widerstand unendlich hat. Für die Ankommer-Kanten und Ist-Kanten der Optimierungsschritte O9b 224, O9c 225, O9d 226, O9e 227, 09f 228, O9g 229 und O9h 230 ist keine Optimierung notwendig, da der aktuelle Widerstand der entsprechenden Ankommer-Kanten in der Routentabelle kleiner ist als der neue Widerstand.

Bezüglich der Ist-Kante $-k_8$ (09i 231) ergibt sich für die Ankommer-Kante $+k_8$ die Notwendigkeit der Optimierung, da die Ankommer-Kante $+k_8$ noch den Widerstandswert unendlich aufweist.

Es ergibt sich somit nach dem Optimierungsschritt 9 folgender Zustand der Routentabelle und der Liste 1 und 2 gemäß Tab. 68 bis 70.

Tab. 68: Routentabelle nach dem Optimierungsschritt 9

| Kante | +Widerstand | +Nachfolgekante | -Widerstand | -Nachfolgekante |
|---|---|---|---|---|
| $k_1$ | 45 | $+k_2$ | 55 | $+k_1$ |
| $k_2$ | 35 | $+k_6$ | 50 | $+k_2$ |
| $k_3$ | 50 | $+k_4$ | 45 | $+k_2$ |
| $k_4$ | 40 | - | 50 | - |
| $k_5$ | 30 | - | 40 | - |
| $k_6$ | 20 | - | 30 | - |
| $k_7$ | 50 | $-k_7$ | 40 | $-k_6$ |
| $k_8$ | 60 | $-k_8$ | 50 | $-k_7$ |

Tab. 69: Liste 1 nach dem Optimierungsschritt 9

| | | | | |
|---|---|---|---|---|
| | | | | |

Tab. 70: Liste 2 nach dem Optimierungsschritt 9

| $-k_1$ | $+k_8$ | | | | |
|---|---|---|---|---|---|

Zum nächsten Optimierungsschritt 10 werden wieder die Liste 1 und Liste 2 miteinander vertauscht gemäß Tab. 71 und 72.

Tab. 71: Liste 1 vor dem Optimierungsschritt 10

| $-k_1$ | $+k_8$ | | | | |
|---|---|---|---|---|---|

Tab. 72: Liste 2 vor dem Optimierungsschritt 10

| | | | | |
|---|---|---|---|---|
| | | | | |

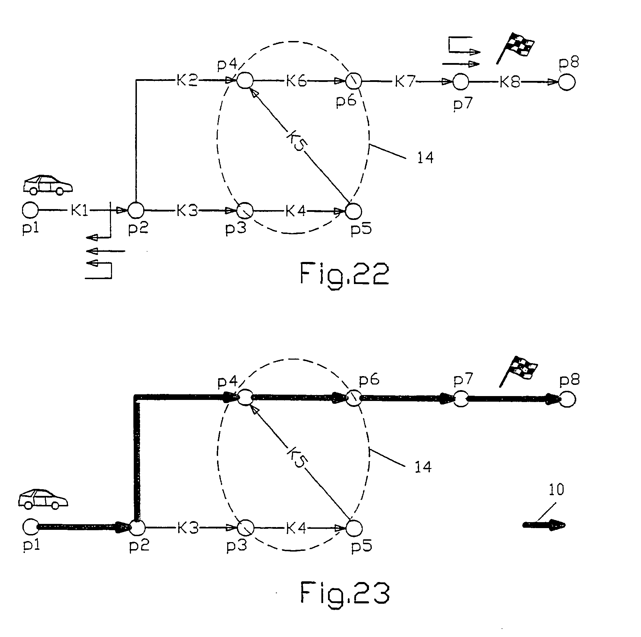

Im Optimierungsschritt 10 erfolgen die gemäß Fig. 22 veranschaulichten Optimierungsschritte O10a 232, O10b 233, O10c 234, O10d 235, O10e 236 mit Kanten gemäß folgender Tabelle 73:

Tab. 73: Optimierungsschritt 10

| Optimierungsschritt | Ist-Kante | Ank-Kante |
|---|---|---|
| O10a232 | $+k_1$ | $-k_1$ |
| O10b233 | $-k_2$ | $+k_2$ |
| O10c234 | $-k_2$ | $-k_6$ |
| O10d235 | $-k_2$ | $+k_5$ |
| O10e236 | $-k_3$ | $+k_3$ |

Für alle Optimierungsschritte O10a bis O10e ergibt sich keine Notwendigkeit der Optimierung, da der aktuelle Widerstand der jeweiligen Ankommer-Kanten in der Routentabelle kleiner als der neue Widerstand ist.

Es ergibt sich somit nach dem Optimierungsschritt 10 folgender Zustand der Routentabelle und der Liste 1 und 2 gemäß Tab. 75 bis 77.

Tab. 75: Routentabelle nach dem Optimierungsschritt 10

| Kante | +Widerstand | +Nachfolgekante | -Widerstand | -Nachfolgekante |
|---|---|---|---|---|
| $k_1$ | 45 | $+k_2$ | 55 | $+k_1$ |
| $k_2$ | 35 | $+k_6$ | 50 | $+k_2$ |
| $k_3$ | 50 | $+k_4$ | 45 | $+k_2$ |
| $k_4$ | 40 | - | 50 | - |
| $k_5$ | 30 | - | 40 | - |
| $k_6$ | 20 | - | 30 | - |
| $k_7$ | 50 | $-k_7$ | 40 | $-k_6$ |
| $k_8$ | 60 | $-k_8$ | 50 | $-k_7$ |

Tab. 76: Liste 1 nach dem Optimierungsschritt 10

| | | | | |
|---|---|---|---|---|
| | | | | |

Tab. 77: Liste 2 nach dem Optimierungsschritt 10

| | | | | |
|---|---|---|---|---|
| | | | | |

Mit dem 10. Optimierungsschritt ist die Liste der zu prüfenden Kanten leer und somit des Ende-Kriterium für den zweiten und letzten Abschnitt der erfindungsgemäßen ViaArea-Routensuche erfüllt.

Es erfolgt anschließend das Zusammenstellen der Routenliste aus den einzelnen Routentabellen der einzelnen Abschnitte und der VAL. Ausgehend von der Kante der aktuellen Fahrzeugposition werden die Kanten entsprechend der Nachfolgeverweise in der Routentabelle des letzten Optimierungsabschnittes in die Routenliste geschrieben. Es beginnt also mit der Routentabelle des ersten Abschnittes gemäß Tab. 75, aus der die Kante $+k_1$ genommen und als erster Eintrag in die Routenliste geschrieben wird. In der Tab. 75 ist als Nachfolger die Kante $+k_2$ eingetragen, so daß diese als zweiter Eintrag in die Routenliste geschrieben wird. Nachfolger von $+k_2$ ist die Kante $+k_6$ welche dementsprechend als nächstes in die Routenliste eingetragen wird. Die Kante $+k_6$ hat keinen Nachfolger mehr, so daß die Auswertung der Routentabelle des ersten Abschnittes gemäß Tab. 75 beendet ist. Die Routenliste hat nun den gemäß Tab. 78 veranschaulichten Inhalt:

Tab. 78: Routenliste des ersten Routenabschnittes

| Nr. | Kante | +Widerstand zum Ziel | Nachfolger zum Ziel |
|---|---|---|---|
| 1 | $+k_1$ | 45 | $+k_2$ |

(fortgesetzt)

| Nr. | Kante | +Widerstand zum Ziel | Nachfolger zum Ziel |
|---|---|---|---|
| 2 | $+k_2$ | 35 | $+k_6$ |
| 3 | $+k_6$ | 20 | - |
| 4 | | | |
| 5 | | | |
| 6 | | | |

Die erste ViaArea ist an der ersten Kante ohne Nachfolger erreicht, welche in diesem Fall die Kante $+k_6$ ist. Entsprechend der VAIT (Tab. 50) wird die Routentabelle des nächsten Routenabschnittes ermittelt. Dies ist die Routentabelle des zweiten Abschnittes gemäß Tab. 47. In dieser Routentabelle (Tab. 47) wird nun mit der letzten bearbeiteten Kante, also der Kante $+k_6$, fortgefahren und die Verkettung in Zielrichtung bis zur nächsten Kante ohne Nachfolger weiter verfolgt. Dies sind somit nacheinander die Kanten $+k_6$, $+k_7$ und $+k_8$. Die Routenliste hat danach den gemäß Tab. 79 veranschaulichten Inhalt

Tab. 79: endgültige Routenliste der ViaArea-Route

| Nr. | Kante | +Widerstand zum Ziel | Nachfolger zum Ziel |
|---|---|---|---|
| 1 | $+k_1$ | 45 | $+k_2$ |
| 2 | $+k_2$ | 35 | $+k_6$ |
| 3 | $+k_6$ | 20 | $+k_7$ |
| 4 | $+k_7$ | 10 | $+k_8$ |
| 5 | $+k_8$ | 0 | - |
| 6 | | | |

Diese ViaArea-Route hat den in Fig. 23 veranschaulichten Verlauf.

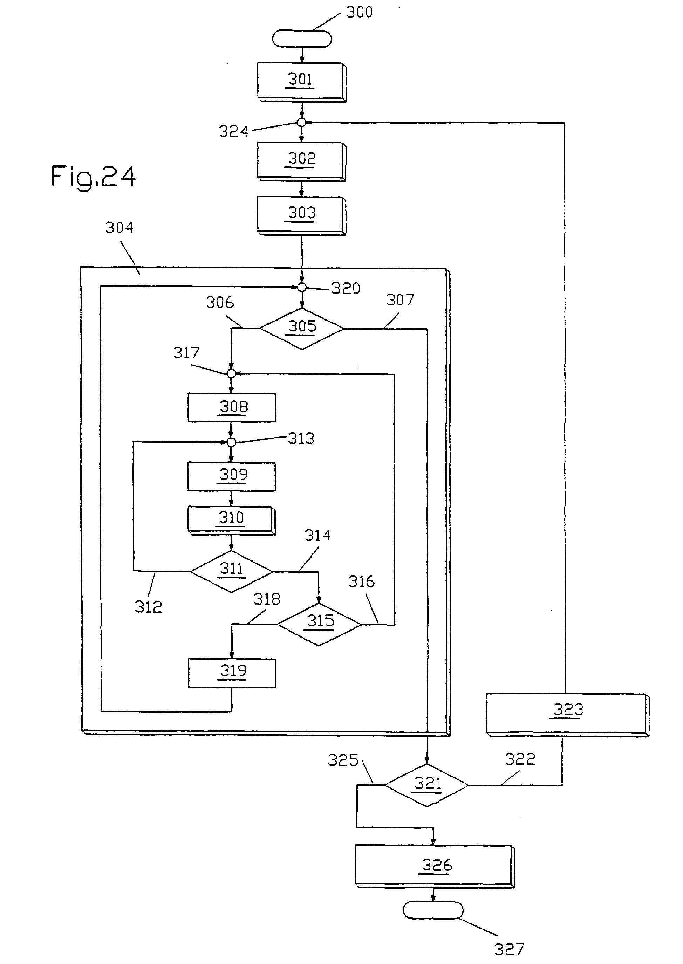

Fig. 24 illustriert das oben an einem konkreten Beispiel geschilderte, erfindungsgemäße Verfahren in einem Flußdiagramm. In Schritt 300 startet das erfindungsgemäße Verfahren. Im Block 301 wird das Ziel und das oder die ViaAreas definiert. Ferner wird die VAL mit VAIT und VADL erzeugt. In Block 302 wird die Routentabelle des aktuell bearbeiteten Abschnittes initialisiert. In Block 303 erfolgt die Initialisierung der VAL mit VAIT und VADL. In 304 erfolgt die Optimierung der Kanten eines Abschnittes. Im Block 305 wird abgefragt, ob die Liste 1 leer ist. Falls "NEIN" wird mit Zweig 306, falls "JA" wird mit Zweig 307 fortgefahren. Im Zweig 306 wird in Block 308 eine Ist-Kante als die nächste in der Liste 1 stehende Kante bestimmt. In Block 309 werden anschließend die dieser Ist-Kante zugeordneten Ankommer-Kanten bestimmt. In Block 310 erfolgt die Kantenoptimierung gemäß der Bedingung von Fig. 11. In Block 311 wird festgestellt, ob alle Ankommer-Kanten bearbeitet sind. Falls "NEIN" wird in einem Zweig 312 zurück zum Punkt 313 vor Block 309 gesprungen. Falls "JA" wird mit Zweig 314 fortgefahren und in Block 315 abgefragt, ob alle Kanten aus der Liste 1 bearbeitet sind. Falls "NEIN" wird mit Zweig 316 zurück zu einem Punkt 317 vor Block 308 gesprungen. Falls "JA" wird mit Zweig 318 fortgefahren und in Block 319 werden Liste 1 und 2 vertauscht. Danach wird zurück zu Punkt 320 vor Block 305 gesprungen.

Sobald die Liste 1 leer aufgefunden wird, wird mit Zweig 307 und Block 321 fortgefahren, in dem abgefragt wird, ob alle Abschnitte optimiert sind. Falls "NEIN" wird in Zweig 322 zu Block 323 verzweigt, wo die VAL aktualisiert wird. Anschließend wird zurück zum Punkt 324 vor Block 302 gesprungen. Falls in Block 321 "JA" festgestellt wird, geht es weiter mit Zweig 325 zu Block 326, in dem die Routenliste zusammen gestellt wird. In Block 327 endet dann das Verfahren.

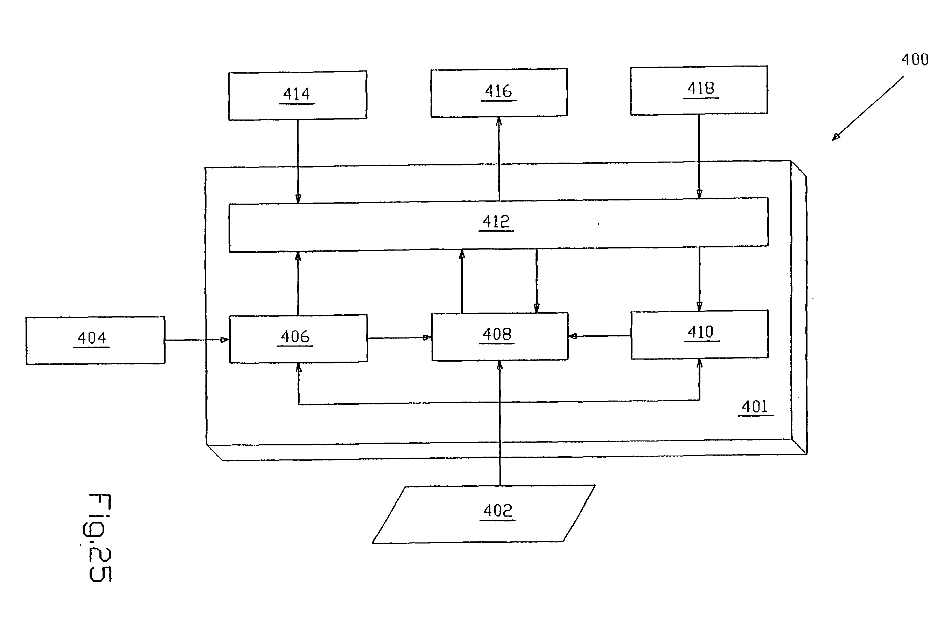

Ein zum Ausführen des erfindungsgemäßen Verfahrens ausgebildete Vorrichtung 400 ist beispielhaft in Fig. 25 dargestellt. Diese umfaßt einen Navigationsrechner 401, einen Massendatenspeicher 402, welcher die digitale Karte als Abbild des realen Straßennetzes enthält, eine Sensoreinrichtung 404, eine Ortungseinrichtung 406, eine Routensucheinrichtung 408, einen Indexspeicher 410, eine Schnittstelle 412, einen Lautsprecher 414, eine Anzeigeeinrichtung 416 und eine Eingabeeinrichtung 418. Die Schnittstelle 412 ist entsprechend zur Eingabe und Definition von ViaAreas erweitert. Auch der Indexspeicher 410 ist entsprechend zum Speicher der VAL mit VAIT und VADL sowie der verschiedenen Routentabellen der einzelnen Abschnitte erweitert.

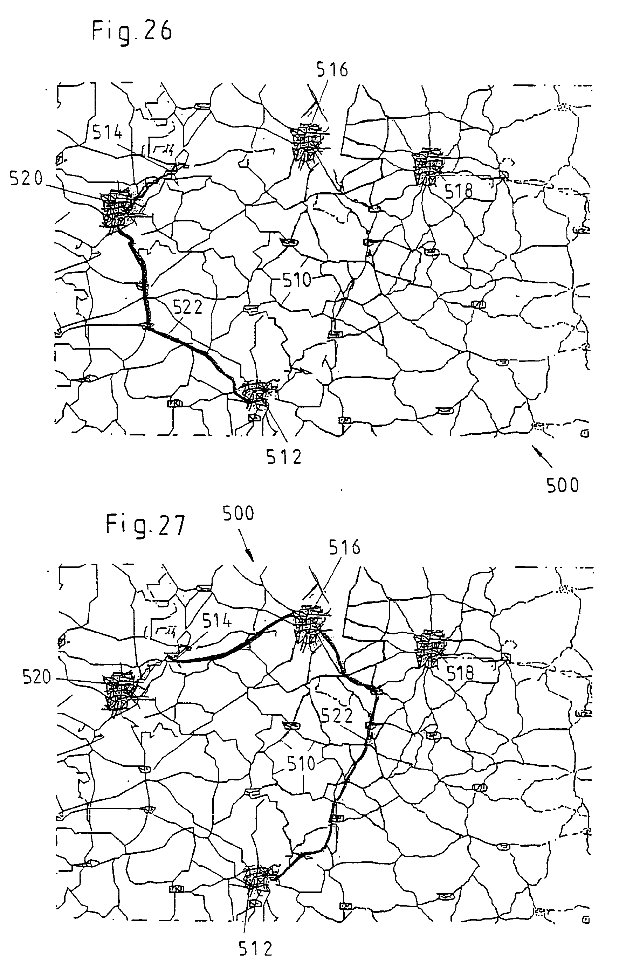

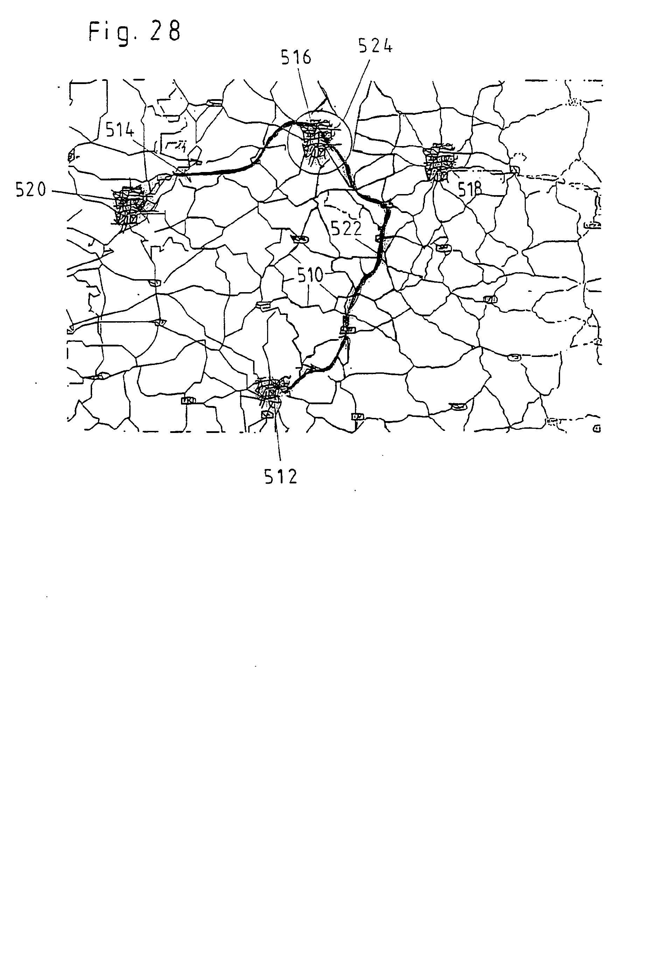

Nachfolgen soll anhand der Fig. 26 bis 28 das erfindungsgemäße Verfahren im Vergleich mit einer herkömmlichen Routenberechnung erläutert werden. Die Fig. 26 bis 28 zeigen jeweils eine Straßenkarte 500 mit Straßen 510 und Orten 512 bis 520. Das dargestellte Straßennetz entspricht beispielhaft einem real existierenden Straßennetz mit den Orten "Kassel" 512, "Minden" 514", "Hannover" 516, "Braunschweig" 518 und "Bielefeld" 520. Jede der Karten 500 enthält neben den Straßen 510 ein berechnete Route 522, welche mit fetter Linie dargestellt ist.

Fig. 26 veranschaulicht eine Situation, bei der zur Routenberechnung lediglich der Ausgangsort "Kassel" 512 und der Zielort "Minden" 514" vorgegeben wurden. Mit anderen Worten handelt sich um eine "normale" Route. Die berechnete Route hat eine Länge von 176 km und benötigt eine voraussichtliche Fahrzeit von 1:44 h. Die Routenliste hat folgenden Inhalt: "Stadtgebiet Kassel, A44, A33, A2 und Umgebung Minden".

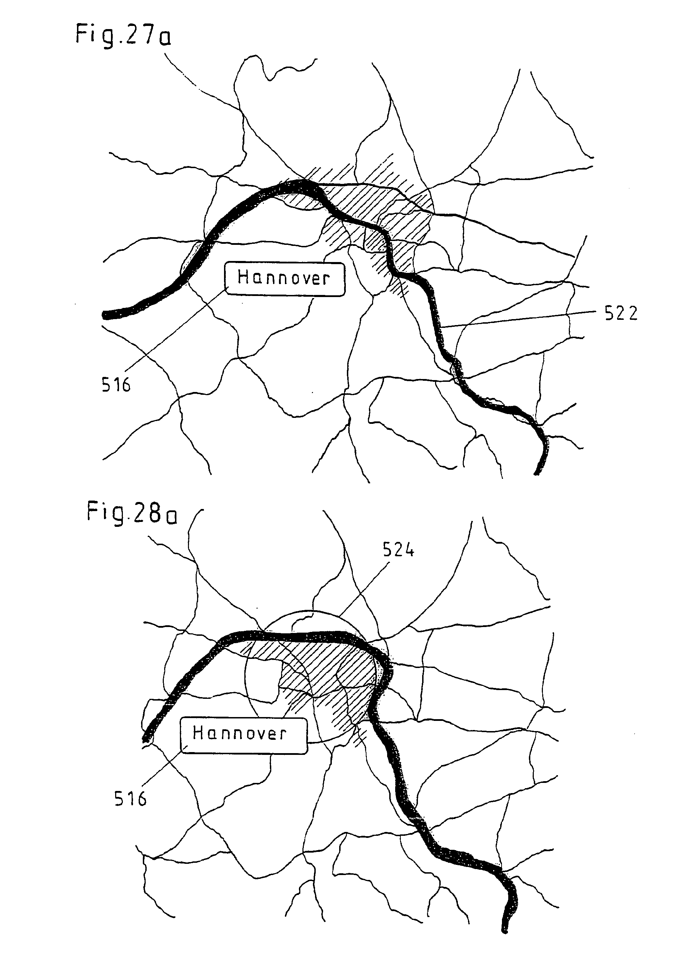

Wird jedoch eine Route über Hannover gewünscht, so wird in bisherigen Navigationsverfahren und -geräten das Zwischen Ziel "Hannover" 516 zusätzlich zum Ausgangsort "Kassel" 512 und der Zielort "Minden" 514" vorgegeben und anschließend die Route berechnet. Diese Situation ist in Fig. 27 veranschaulicht. Hierbei wird zunächst eine erste Route von "Kassel" 512 nach "Hannover" 516 berechnet, danach wird eine separate zweite Route von "Hannover" 516 nach "Minden" 514 berechnet und anschließend werden diese beiden Routen einfach zusammengesetzt. Die erste Route hat eine Länge von 165 km mit einer voraussichtlichen Fahrzeit von 1:36 h. Die zweite Route hat eine Länge von 75 km mit einer voraussichtlichen Fahrzeit von 0:55 h. Die Gesamtroute 522 hat dann eine Länge von 240 km und eine voraussichtliche Fahrzeit von 2:32 h. In der Routenliste ist folgendes Eingetragen: "Stadtgebiet Kassel, A7, Hannover (Stadtdurchfahrt), A2, Umgebung von Minden".

Es ist offensichtlich, dass durch die Berechnung zweier separater Routen, welche einfach zusammengesetzt werden, im Bereich der Schnittstelle der beiden Routen, also beim Zwischenziel "Hannover" 516, keine Optimierung stattfindet. Zur Verdeutlichung ist in Fig. 27a und 28a der Bereich des Zwischenzieles "Hannover" noch weiter schematisiert und vergrößert dargestellt. Die Route 522 führt direkt durch einen Innenstadtbereich (Fig. 27a), was sich entsprechend negativ auf die Fahrzeit auswirkt. Dies liegt daran, dass das Navigationssystem keine echte Route mit Zwischenziel berechnet, sondern vielmehr davon ausgeht, dass bei der ersten Routenberechnung "Hannover" 516 den Zielort darstellt.

Dieser gravierende Nachteil wird mit der oben erläuterten Erfindung beschrieben ausgeräumt und eine echte "Route mit Zwischenziel" berechnet, wie in Fig. 28 und Fig. 28a veranschaulicht. Hierbei ist "Hannover" 516 als Übergangsbereich 524 definiert. Die Länge der Gesamtroute 522 ist mit 245 km zwar etwas länger als die Route gemäß Fig. 27, jedoch ergibt sich eine deutlich kürzere Fahrzeit von 2:17 h. Die Länge der Strecke zwischen "Kassel" 512" und "Hannover" 516 beträgt nun 164 km mit einer voraussichtlichen Fahrzeit von 1:26 h und die Länge der Strecke "Hannover" 516 nach "Minden" 514 beträgt nun 81 km mit einer voraussichtlichen Fahrzeit von 0:51 h. In der Routenliste ist folgendes eingetragen: "Stadtgebiet Kassel, A7, AK Hannover-Ost, A2, Umgebung Minden". Da nun erfindungsgemäß bei der Berechnung der Gesamtroute 522 das letztendliche Ziel, nämlich die Fahrt nach "Minden" 514 nicht aus dem Auge verloren wird, enthält die berechnete Route 522 statt einer Durchfahrt durch die Innenstadt von "Hannover" 516 eine Umgehung des Stadtbereiches von Hannover" 516. Dies führt zu dem entsprechenden Zeitvorteil.

Der Vergleich von Fig. 28 bzw. 28a mit Fig. 27 bzw. 27a veranschaulicht deutlich den Unterschied zwischen der Erfindung und dem herkömmlichen Verfahren zur Routenberechnung mit Zwischenziel. Das herkömmliche Verfahren gemäß Fig. 27 kann die Weiterfahrt von "Hannover" 516 nach "Minden" 514 nicht berücksichtigen und wählt daher einen Weg in das Stadtgebiet von "Hannover" 516 hinein, so als ob "Hannover" 516 der endgültige Zielort wäre. Dagegen Wählt das erfindungsgemäße Verfahren im Übergangsbereich 524 des Zwischenzieles "Hannover" 516 eine Route, welche bzgl. der Weiterfahrt nach "Minden" 514 optimiert ist.


**Patentansprüche**

1. Verfahren zum Bestimmen einer Route von einem Ausgangsort (41) zu einem Zielort (k8) auf der Basis einer digitalen Karte, welche ein reales Straßennetz in Kanten (k1, k2, ..., k8) mit jeweiligen Widerständen und Knoten (p1, p2, ...p8) abbildet, wobei mittels eines Routensuchalgorithmus für die Route optimierte Kanten in einer Routentabelle abgespeichert werden, wobei für die Route wenigstens ein Zwischenziel (12) vorbestimmt wird,
   **dadurch gekennzeichnet, daß**
   wenigstens ein Zwischenziel (12) als Übergangsbereich in Form einer Gruppe von Kanten (k3, k4, k5) wird, wobei bei der Bestimmung der Route der Widerstand der Gesamtroute vom Ausgangsort (k1) über alle Zwischenziele (12) bis zum Zielort (k8) minimiert wird.

2. Verfahren nach Anspruch 1.
   **dadurch gekennzeichnet, daß**
   jedes Zwischenziel als Übergangsbereich in der Form eines flächenhaften Bereichs der digitalen Karte definiert und entsprechende, in dem flächenhaften Bereich befindliche Kanten (k3, k4, k5) des entsprechenden Übergangsbereiches (12) zugeordnet und in einer Übergangsbereichliste gespeichert werden, wobei eine erste Kantenoptimierung von einer dem Zielort entsprechenden Zielkante (k8) ausgehend durchgeführt und das Ergebnis in einer ersten Routentabelle abgespeichert wird, wobei ferner der Anzahl der vorbestimmten Übergangsbereiche entsprechende weitere Abschnitts-Kantenoptimierungen durchgeführt und in jeweiligen, separaten Abschnitts-Routentabellen gespeichert werden, wobei am Ende der ersten Kantenoptimierung die in der grund- und zielinitialisierten Übergangsbereichliste gespeicherten Kanten mit entsprechenden Widerständen aus der ersten Routentabelle aktualisiert werden, wobei ferner zu Beginn einer jeden Abschnitts-Kantenoptimierung in die jeweilige grundinitialisierte Abschnitts-Routentabelle die aktuellen Widerstände der Kanten der Übergangsbereichliste eingetragen werden und wobei ferner jeweils am Ende der ersten bis zur vorletzten Abschnitts-Kantenoptimierung die Widerstände der in der jeweils aktuellen Übergangsbereichliste gespeicherten Kanten mit Widerständen der entsprechenden Kanten der jeweiligen Abschnitts-Routentabelle aktualisiert werden, wobei nach der letzten Abschnitts-Kantenoptimierung beginnend mit der letzten Abschnitts-Routentabelle bis zur ersten Routentabelle aus diesen eine Routenliste zusammen gesetzt wird, so daß der Gesamtwiderstand der Route vom Ausgangsort (k1) über ein oder mehrere Zwischenziele (12) zum Zielort (k8) minimal ist.

3. Verfahren nach Anspruch 2,
   **dadurch gekennzeichnet, daß**
   das Zusammensetzen der Routenliste derart erfolgt, daß beginnend mit der letzten Abschnitts-Routentabelle der zuletzt ausgeführten Abschnitts-Kantenoptimierung nacheinander entsprechende Kanten in die Routenliste eingetragen werden, bis in der letzten Abschnitts-Routentabelle für eine Kante kein Nachfolger definiert ist und mit dieser Kante mit einer nächsten und weiteren Abschnitts-Routentabelle bis zur ersten Routentabelle in gleicher Weise fortgefahren wird, wobei die Reihenfolge, in der die Abschnitts-Routentabellen abgearbeitet werden, in der Übergangsbereichliste vorbestimmt ist.

4. Verfahren nach Anspruch 2 oder 3,
   **dadurch gekennzeichnet, daß**
   in der Übergangsbereichliste eine Übergangsbereich-Beschreibungsliste und eine Übergangsbereich-Indextabelle abgespeichert werden, wobei die Übergangsbereich-Indextabelle einen Zuordnung von Übergangsbereichen zu Übergangsbereich-Beschreibungsliste und Routentabellen enthält und die Übergangsbereich-Beschreibungsliste jeweilige eines Übergangsbereiches zugeordnete Kanten mit zugehörigen Widerständen beinhaltet.

5. Verfahren nach Anspruch 4,
   **dadurch gekennzeichnet, daß**
   als erster Eintrag in die Übergangsbereich-Beschreibungsliste das Ziel mit Widerstand null eingetragen wird.

6. Verfahren nach einem der Ansprüche 2 bis 5,
   **dadurch gekennzeichnet, daß**
   zur Grundinitialisierung alle Widerstände auf unendlich gesetzt und etwaig gespeicherte Nachfolger gelöscht werden.

7. Verfahren nach einem der Ansprüche 2 bis 6,
   **dadurch gekennzeichnet, daß**
   zur Zielinitialisierung die Widerstände einer dem Zielort entsprechenden Kante auf null gesetzt werden.

8. Verfahren nach einem der vorhergehenden Ansprüche,
   **dadurch gekennzeichnet, daß**
   der Übergangsbereich als Rechteck, Vieleck, Ellipse oder Kreis um einen markanten Punkt, insbesondere eine Stadt, Ballungsraum oder Autobahnausfahrt, gewählt wird.

9. Verfahren nach einem der vorhergehenden Ansprüche,
   **dadurch gekennzeichnet, daß**
   der Übergangsbereich räumlich unscharf beschrieben wird.

10. Verfahren nach einem der vorhergehenden Ansprüche,
    **dadurch gekennzeichnet, daß**
    zusätzlich Netzbeeinflussungen durch Telematik und/oder benutzerdefinierte Manipulationen, wie beispielsweise "Stau voraus"-Sperrungen, bei der Routenberechnung berücksichtigt werden.

11. Vorrichtung (400) zum Bestimmen einer Route von einem Ausgangsort (k1) zu einem Zielort (k8) auf der Basis einer in einem Speicher (402) abgespeicherten digitalen Karte, welche ein reales Straßennetz in Kanten (K1, K2, ...,

K8) jeweiligen Widerständen und Knoten (p1, p2, ..., p8) abbildet, wobei

eine Einrichtung (412, 418) zur Eingabe und Definition von wenigstens einem als Übergangsbereich (12) in der Form eines flächenhaften Bereichs der digitalen Karte definierten Zwischenziel vorgesehen ist, **dadurch gekennzeichnet, daß** eine Speichereinrichtung (410) zum Speichern von Eigenschaften und ggf. Reihenfolge des bzw. der Übergangsbereiche vorgesehen ist und daß das flächenhafte Zwischenziel als Übergangsbereich in Form einer Gruppe von Kanten (K3, K4, K5) definiert ist und zur Bestimmung der Route die Minimierung des Widerstandes der Gesamtroute vom Ausgangsort (K1) über alle Zwischenziele (12) bis zum Zielort (K8) vorgesehen ist.

**12.** Vorrichtung (400) nach Anspruch 11,

**dadurch gekennzeichnet, daß**

diese folgendes aufweist, einen Navigationsrechner (401), einen Massendatenspeicher (402), welcher die digitale Karte als Abbild des realen Straßennetzes enthält, eine Sensoreinrichtung (404), eine Ortungseinrichtung (406), eine Routensucheinrichtung (408), einen Indexspeicher (410), eine Schnittstelle (412), einen Lautsprecher (414), eine Anzeigeeinrichtung (416) und eine Eingabeeinrichtung (418).

## Claims

**1.** Method for determining a route from a starting location (k1) to a final destination (k8) on the basis of a digital map which maps a real road network onto edges (k1, k2, ... k8) with respective resistances and nodes (p1, p2, ... P8), edges which are optimized for the route by means of a route search algorithm being stored in a route table, and at least one intermediate destination (12) being predetermined for the route, **characterized in that** at least one intermediate destination (12) is defined as a transition region in the form of a group of edges (k3, k4, k5), the resistance of the total route from the starting location (k1) to the final destination (k8) via all the intermediate destinations (12) being minimized during the determination of the route.

**2.** Method according to Claim 1, **characterized in that** each intermediate destination is defined as a transition region in the form of a planar region of the digital map, and corresponding edges (k3, k4, k5), located in the planar region, of the corresponding transition region (12) are assigned and stored in a transition region list, a first edge optimization process being carried out from a destination edge (k8) corresponding to the final destination, and the result being stored in a route table, wherein in addition further section edge optimization processes which correspond to the number of predetermined transition regions are carried out and stored in respective, separate section route tables, wherein at the end of the first edge optimization the edges which are stored in the transition region list which has basic and destination initialization are updated with corresponding resistances from the first route table, wherein in addition the current resistances of the edges of the transition region list are entered into the respective basic-initialized section route table at the start of each section edge optimization process, and wherein in addition the resistances of the edges which are stored in the respective current transition region list are respectively updated at the end of the first to the penultimate section edge optimization process with resistances of the corresponding edges of the respective section route table, wherein after the last section edge optimization process a route list is compiled starting with the last section route table up to the first route table so that the overall resistance of the route from the starting location (k1) to the final destination (k8) via one or more intermediate destinations (12) is minimal.

**3.** Method according to Claim 2, **characterized in that** the route list is compiled in such a way that starting with the last section route table of the section edge optimization which is executed last successively corresponding edges are entered into the route list until in the last section route table no successor is defined for an edge and the same procedure is continued with this edge with a subsequent section route table and further section route tables up to the first route table, the sequence in which the section route tables are processed being predetermined in the transition region list.

**4.** Method according to Claim 2 or 3, **characterized in that** a transition region description list and a transition region index table are stored in the transition region list, the transition region index table containing an assignment of the transition regions to the transition region description list and route tables, and the transition region description list containing respective edges which are assigned to a transition region and have associated resistances.

**5.** Method according to Claim 4, **characterized in that** the destination is entered with resistance zero as a first input in the transition region description list.

**6.** Method according to one of Claims 2 to 5, **characterized in that** for basic initialization all the resistances are set to infinite and any stored successors are deleted.

7. Method according to one of Claims 2 to 6, **characterized in that** for the purpose of destination initialization the resistances of an edge which corresponds to the final destination is set to zero.

8. Method according to one of the preceding claims, **characterized in that** the transition region is selected as a rectangle, polygon, ellipse or circle around a salient point, in particular a town, conurbation or motorway exit.

9. Method according to one of the preceding claims, **characterized in that** the transition region is described in a spatially imprecise way.

10. Method according to one of the preceding claims, **characterized in that** additional network influences by telematics and/or user-defined manipulation such as, for example, "traffic jam ahead", road closures, are taken into account in the calculation of a route.

11. Device (400) for determining a route from a starting location (k1) to a final destination (k8) on the basis of a digital map which is stored in a memory (402) and which maps a real road network onto edges (k1, k2, ..., k8) with respect to resistances and nodes (p1, p2 ... p8), a device (412, 418) being provided for inputting and defining at least one intermediate destination which is defined as a transition region (12) in the form of a planar region of the digital map, **characterized in that** a memory device (410) is provided for storing properties and if appropriate the sequence of the transition region or regions, and that the planar intermediate destination is defined as a transition region in the form of a group of edges (K3, K4, K5) and, in order to determine the route, there is provision for the resistance of the total route from the starting location K1 to the final destination (K8) via all the intermediate destinations (12) to be minimized.

12. Device (400) according to Claim 11, **characterized in that** said device has the following: a navigation computer (401), a mass data storage means (402) which contains the digital map as a mapping of the real road network, a sensor device (404), a locating device (406), a route-searching device (408), an index memory (410), an interface (412), a loudspeaker (414), a display device (416) and an input device (418).

**Revendications**

1. Procédé permettant de déterminer un itinéraire depuis un lieu de départ (K1) vers un lieu de destination (K8) sur la base d'une carte numérique, laquelle reproduit un réseau routier réel sous forme d'arêtes (K1, K2, ..., K8) avec des résistances et noeuds (p1, p2, ..., p8) respectifs, un algorithme de recherche d'itinéraire permettant de sauvegarder, pour l'itinéraire, des arêtes optimisées dans un tableau d'itinéraires, avec au moins une destination intermédiaire (12) prédéfinie pour l'itinéraire,
   **caractérisé en ce qu'**
   on définit au moins une destination intermédiaire (12) comme zone transitoire sous la forme d'un groupe d'arêtes (K3, K4, K5), en minimisant, lors de la détermination de l'itinéraire, la résistance de l'itinéraire entier passant par toutes les destinations intermédiaires (12) depuis le lieu de départ (K1) vers le lieu de destination (K8).

2. Procédé selon la revendication 1,
   **caractérisé en ce qu'**
   on définit chaque destination intermédiaire sous la forme d'une zone plane de la carte numérique et on associe des arêtes (K3, K4, K5) de la zone transitoire correspondante (12) correspondantes, se trouvant dans la zone plane, et on les enregistre dans une liste de zones transitoires, en faisant une première optimisation des arêtes à partir d'une arête cible (K8) correspondant au lieu de destination et le résultat étant stocké dans un premier tableau d'itinéraires, d'autres optimisations d'arêtes de tronçon étant réalisées en plus du nombre de zones transitoires prédéfinies et enregistrées dans des tableaux d'itinéraires partiels séparés respectifs, les arêtes enregistrées dans la liste des zones transitoires initialisées par rapport à la base et à la destination, étant actualisées, à la fin de la première optimisation d'arêtes, avec des résistances correspondantes à partir du premier tableau d'itinéraires, les résistances actuelles des arêtes de la liste de zones transitoires étant, de plus, inscrites dans le tableau des itinéraires partiels initialisé par rapport à la base au début de chaque optimisation d'arêtes de tronçons et, de plus, les résistances des arêtes enregistrées dans la liste de zones transitoires respectives du moment étant actualisées, à l'issue de chaque première et avant-dernière optimisation d'arêtes de tronçon, avec des résistances des arêtes correspondantes du tableau des itinéraires partiels respectif, après la dernière optimisation d'arrêtes de tronçon à partir du dernier tableau des itinéraires partiels jusqu'au premier tableau d'itinéraires, une liste des itinéraires étant composée à partir de ceux-ci, de sorte que la résistance totale de l'itinéraire depuis le lieu de départ (K1) jusqu'au lieu de destination (K8) en passant par une ou plusieurs destinations intermédiaires (12) est minimale.

3. Procédé selon la revendication 2,
**caractérisé en ce que**
la liste des itinéraires est composée de manière à inscrire successivement dans celle-ci des arêtes correspondantes à partir du dernier tableau d'itinéraires partiels de la dernière optimisation d'arêtes de tronçon réalisée jusqu'à ce qu'il n'y ait plus de successeur dans le dernier tableau des itinéraires partiels pour une arête et qu'avec cette arête on continue de la même façon jusqu'au premier tableau d'itinéraires avec un tableau des itinéraires partiels suivant et un autre tableau des itinéraires partiels, l'ordre dans lequel les tableaux des itinéraires partiels sont stockés, étant prédéfini dans la liste des zones transitoires.

4. Procédé selon la revendication 2 ou 3,
**caractérisé en ce que**
dans la liste des zones transitoires, on stocke une liste descriptive des zones transitoires et un tableau d'indexage des zones transitoires, le tableau d'indexage des zones transitoires contenant une allocation de zones transitoires à la liste descriptive des zones transitoires et à des tableaux d'itinéraires, et la liste descriptive des zones transitoires contient pour chaque zone transitoire, des arêtes associées avec des résistances correspondantes.

5. Procédé selon la revendication 4,
**caractérisé en ce qu'**
on inscrit, comme première entrée dans la liste descriptive des zones transitoires, la destination avec une résistance zéro.

6. Procédé selon l'une quelconque des revendications 2 à 5,
**caractérisé en ce que**
pour l'initialisation de base, on met toutes les résistances sur l'infini et on supprime les successeurs éventuellement enregistrés.

7. Procédé selon l'une quelconque des revendications 2 à 6,
**caractérisé en ce que**
pour l'initialisation de la destination, les résistances d'une arête correspondant au lieu de destination, sont mises à zéro.

8. Procédé selon l'une quelconque des revendications précédentes,
**caractérisé en ce que**
la zone transitoire choisie est un rectangle, un polygone, une ellipse ou un cercle autour d'un point marquant, en particulier une ville, un centre urbain ou une sortie d'autoroute.

9. Procédé selon l'une quelconque des revendications précédentes,
**caractérisé en ce que**
la zone transitoire est décrite de manière géographiquement imprécise.

10. Procédé selon l'une quelconque des revendications précédentes,
**caractérisé en ce qu'**
on tient compte, en plus, dans le calcul de l'itinéraire, d'influences du réseau à travers la télématique et/ou des manipulations définies par l'utilisateur comme, par exemple, les blocages "bouchon devant".

11. Dispositif (400) pour la détermination d'un itinéraire depuis un lieu de départ (K1) vers un lieu de destination (K8) sur la base d'une carte numérique stockée dans une mémoire (402), laquelle carte reproduit un réseau routier réel sous forme d'arêtes (K1, K2, ..., K8) avec des résistances et noeuds (p1, p2, ..., p8) respectifs, dans lequel on prévoit un dispositif (412, 418) permettant la saisie et la définition d'au moins une destination intermédiaire définie en tant que zone transitoire (12) en forme de zone plane de la carte numérique,
**caractérisé ce qu'**
on prévoit un dispositif de mémorisation (410) pour l'enregistrement de propriétés et, le cas échant, de l'ordre de la ou des zones transitoires, et la destination intermédiaire plane est définie en tant que zone transitoire sous la forme d'un groupe d'arêtes (K3, K4, K5) et, pour déterminer l'itinéraire, on minimise la résistance de l'itinéraire entier passant par toutes les destinations intermédiaires (12) depuis le lieu de départ (K1) vers le lieu de destination (K8).

**12.** Dispositif (400) selon la revendication 11,
**caractérisé en ce qu'**
elle présente les éléments suivants : un calculateur de navigation (401), une mémoire de données de masse (402), laquelle contient la carte numérique reproduisant le réseau routier réel, un dispositif de détection (404), un dispositif de localisation (406), un dispositif de recherche d'itinéraire (408), une mémoire d'index (410), une interface (412), un haut-parleur (414), un dispositif d'affichage (416) et un dispositif de saisie (418).

Fig.1

Fig.2

Fig.3

Fig.4

Fig.5

Fig.6

Fig.7

Fig. 8

Fig.9

Fig.10

Fig.11

Fig.12

Fig.13

Fig.14

Fig.15

Fig.16

Fig.17

Fig.18

Fig.19

Fig.20

Fig.21

Fig.22

Fig.23

Fig.24

400

401

418

410

416

412

408

402

414

406

404

Fig.25

Fig.26

Fig.27

Fig. 28

Fig.27a

Hannover

522

516

Fig.28a

524

Hannover

516